# EUROPEAN PATENT SPECIFICATION

(11) **EP 3 358 300 B1**
(45) Date of publication and mention of the grant of the patent: **12.02.2020**
(21) Application number: 15905117.6
(22) Date of filing: 30.09.2015
(51) Int. Cl.: G01C 21/14, G01C 25/00, G01C 22/00

(54) **CALIBRATION METHOD BASED ON DEAD RECKONING TECHNIQUE, AND PORTABLE ELECTRONIC DEVICE**
KALIBRIERVERFAHREN BASIEREND AUF KOPPELNAVIGATIONSTECHNIK UND TRAGBARE ELEKTRONISCHE VORRICHTUNG
PROCÉDÉ D'ÉTALONNAGE BASÉ SUR LA TECHNIQUE DE NAVIGATION À L'ESTIME, ET DISPOSITIF ÉLECTRONIQUE PORTABLE

(43) Date of publication of application: 08.08.2018
(73) Proprietor: Huawei Technologies Co., Ltd., Longgang District Shenzhen, Guangdong 518129 (CN)
(72) Inventor: LU, Chenxi, Shenzhen, Guangdong 518129 (CN)
(74) Representative: Thun, Clemens
(86) International application number: PCT/CN2015/091330
(87) International publication number: WO 2017/054205

(56) References cited:
- WO-A2-98/44362
- CN-A- 1 617 186
- CN-A- 104 215 238
- CN-A- 104 977 006
- DE-A1-102014 007 794
- JP-A- 2006 171 456
- US-A1- 2014 163 871
- US-B1- 6 188 959

## Description

### TECHNICAL FIELD

The present invention relates to the positioning field, and in particular, to a calibration method based on a dead reckoning technology and a portable electronic device.

### BACKGROUND

A dead reckoning technology is an autonomous positioning and navigation manner and has advantages of low power consumption and independence of external facilities. A basic principle of the dead reckoning technology is: determining calibrated coordinates of a start point; obtaining a motion speed or distance by using an acceleration sensor; and obtaining, by estimation, a position of a portable electronic device according to the motion speed or distance in combination with direction deflection information that is output by a gyroscope or geomagnetic sensor. However, as time passes by, a positioning error of the dead reckoning technology gradually accumulates, causing a continuous decrease in positioning accuracy. Therefore, another technical means is required for implementing position calibration.

For example, US 2014/163871 A1 refers to an GPS receiving apparatus, which comprises an GPS receiving unit, which detects a position, a course data storing unit, which stores course data representing a course, along which plural transit positions are set, a motion sensor, which detects motion of a user, a moving-distance obtaining unit, which obtains a moving distance of the user based on the detected user's motion, a proximity judging unit, which judges based on the obtained moving distance, whether the user has come close to a next transit position along the course, GPS start-up controlling unit, which makes GPS receiving unit start up, when the proximity judging unit determines that the user has come close to the next transit position, and GPS stop controlling unit, which brings GPS receiving unit down, when it is determined based on the position detected by GPS receiving unit, that the user has passed through the next transit position.

Regarding pedestrian dead reckoning in the dead reckoning technology, to precisely obtain a motion parameter, training needs to be performed on a path whose start point is a known position, so as to obtain the motion parameter by estimation. When the portable electronic device moves on a new path, a user position is determined by using a motion parameter that is obtained in training mode, and the user's motion parameter on the new path is not updated any more. This further causes a gradual decrease in the positioning accuracy.

In conclusion, the current dead reckoning technology has the following problem: A positioning error accumulates and increases with time, so that positioning accuracy is poor.

### SUMMARY

To resolve the technical problems, embodiments of the present invention provide a calibration method that is based on a dead reckoning technology and a portable electronic device, so as to resolve a problem of poor positioning accuracy of the dead reckoning technology in the prior art.

In a first aspect a calibration method based on a dead reckoning technology performed by a portable electronic device is provided, the method comprising:
- determining, according to the dead reckoning technology, coordinates of a current position of the portable electronic device, a track parameter value at the current position, and a motion direction at the current position, wherein the track parameter value comprises any one of a curvature change rate, a curvature radius change rate, a curvature, or a curvature radius, wherein the portable electronic device moves on a preset target path, and at least two calibration points are set on the preset target path, wherein when the preset target path is smooth, each calibration point of the at least two calibration points on the preset target path is a point on the preset target path at which the track parameter value is greater than a first threshold; or when the preset target path is non-smooth, each calibration point of the at least two calibration points on the preset target path is a turning point on the preset target path;
- if the motion direction is from a first calibration point to a second calibration point, obtaining coordinates of the second calibration point; and
   when it is detected that the track parameter value at the current position is greater than a second threshold, correcting the coordinates of the current position to the coordinates of the second calibration point.

In a first implementation form of the first aspect, wherein the when it is detected that the track parameter value at the current position is greater than the second threshold, correcting the coordinates of the current position to the coordinates of the second calibration point comprises: when it is detected that the track parameter value at the current position is greater than the second threshold and the portable electronic device has not turned around between the first calibration point and the second calibration point, obtaining a first path length between the current position and the second calibration point, and obtaining a path length between the first calibration point and the second calibration point;
dividing the first path length by the second path length to obtain a proportion value;
if the proportion value obtained by calculation is less than a third threshold, obtaining a track parameter value at the second calibration point;
calculating a difference that is obtained by subtracting the track parameter value at the second calibration point from the track parameter value at the current position; and
if the difference obtained by calculation is less than a fourth threshold, correcting the coordinates of the current position to the coordinates of the second calibration point.

In a second implementation form of the first aspect, when it is detected that the track parameter value at the current position is greater than the second threshold, correcting the coordinates of the current position to the coordinates of the second calibration point comprises:
when it is detected that the track parameter value at the current position is greater than the second threshold and the portable electronic device has turned around once between the first calibration point and the second calibration point, obtaining coordinates of a turning position;
calculating a third path length between the current position and the turning position, and a fourth path length between the second calibration point and the turning position;
calculating a proportion value that is obtained by dividing the third path length by the fourth path length;
if the proportion value obtained by calculation is greater than a fifth threshold, obtaining a track parameter value at the second calibration point;
calculating a difference that is obtained by subtracting the track parameter value at the second calibration point from the track parameter value at the current position; and
if the difference obtained by calculation is less than a sixth threshold, correcting the coordinates of the current position to the coordinates of the second calibration point.

In a second aspect a portable electronic device is provided configured to perform any of the above methods.

In a third aspect a computer readable storage medium is provided that stores one or more programs, wherein the one or more programs comprise an instruction, and when executed by a portable electronic device, the instruction instructs the portable electronic device to execute any of the above methods.

Implementation of the embodiments of the present invention has the following beneficial effects:
A portable electronic device moves on a preset target path, where calibration points are set on the target path. The portable electronic device obtains a current position by reckoning according to a dead reckoning technology. When a track parameter value at the current position meets a preset calibration condition, coordinates of the current position are corrected to coordinates of a next calibration point. In this way, a positioning error of the dead reckoning technology can be rectified at the calibration point, thereby avoiding accumulation of the positioning error and improving positioning accuracy of the dead reckoning technology.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1A is a block diagram of a portable electronic device 100 provided with a touch-sensitive display 112 according to some embodiments;
FIG. 1B is a block diagram of illustrative components configured for event processing according to some embodiments;
FIG. 2 is a portable electronic device 100 provided with a touchscreen 112 according to some embodiments;
FIG. 3 is a block diagram of an illustrative electronic device provided with a display and a touch-sensitive surface according to some embodiments;
FIG. 4 is a schematic flowchart of a calibration method based on a dead reckoning technology according to a first embodiment of the present invention;
FIG. 5A and FIG. 5B is a schematic flowchart of a calibration method based on a dead reckoning technology according to Embodiment 2 of the present invention;
FIG. 6A and FIG. 6B is a schematic flowchart of a calibration method based on a dead reckoning technology according to Embodiment 3 of the present invention;
FIG. 7 is a schematic diagram of a target path set on an electronic map according to an embodiment of the present invention; and
FIG. 8 is a schematic structural diagram of a portable electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

Now the embodiments are described to in detail, and examples of the embodiments are shown in the accompanying drawings. Many specific details are provided in the following detailed descriptions, so as to provide a full understanding of the present invention. However, it is obvious to a person skilled in the art that the present invention may be practiced without the specific details. In other cases, well-known methods, procedures, components, circuits, and networks are not described in detail, so that aspects of the embodiments are not unnecessarily made hard to understand.

It should be understood that, although the terms such as "first" and "second" may be used to describe various elements in this specification, the elements should not be limited by the terms. The terms are merely used to distinguish one element from another element. For example, a first threshold may be named a second threshold, and similarly, a second threshold may be named a first threshold, without departing from the scope of the present invention. Both the first threshold and the second threshold are thresholds, but the first threshold and the second threshold may not be one threshold. In some scenarios, the first threshold and the second threshold may be one threshold though.

The terms used in the description of the present invention in this specification are merely for the purpose of describing specific embodiments, and are not intended to limit the present invention. The terms "one", "a", and "this" of singular forms used in this specification and the appended claims of the present invention are also intended to include plural forms, unless otherwise specified in the context explicitly. It should be further understood that, the term "and/or" used in this specification indicates and includes any or all possible combinations of one or more items in associated listed items. It should be further understood that the term "include" and/or "comprise" used in this specification specifies presence of features, integers, steps, operations, elements, and/or components, with presence or addition of one or more other features, integers, steps, operations, elements, components, and/or their combinations not excluded.

According to the context, the term "if' used in this specification may be interpreted as a meaning of "when" or "after" or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

An electronic device, a user interface configured for such a device, and an embodiment used for an associated procedure in which such a device is used are described. In some embodiments, the device is a portable communications device, such as a mobile phone, that further includes another function such as a personal digital assistant and/or music player function. An illustrative embodiment of a portable electronic device includes but is not limited to a portable electronic device using iOS®, Android®, Microsoft®, or another operating system. Another portable electronic device such as a laptop computer or a tablet computer provided with a touch-sensitive surface (for example, a touchscreen display and/or a touchpad) may be used. It should be further understood that in some embodiments, the device is not a portable communications device, but a desktop computer provided with a touch-sensitive surface (for example, a touchscreen display and/or a touchpad).

An electronic device including a display and a touch-sensitive surface is described in the following discussion. However, it should be understood that the electronic device may include one or more other physical user interface devices, such as a physical keyboard, a mouse, and/or a joystick.

The device generally supports various application programs, such as one or more of the following: a drawing application program, a presentation application program, a Word processing application program, a web page creating application program, a drive editing application program, a spreadsheet application program, a game application program, a phone application program, a video conference application program, an email application program, an instant messaging application program, an exercise support application program, a photograph management application program, a digital camera application program, a digital video camera application program, a network browsing application program, a digital music player application program, and/or a digital video player application program.

Various application programs that can be executed on the device may use at least one common physical user interface device, such as a touch-sensitive surface. One or more functions of the touch-sensitive surface and corresponding information displayed on the device may be adjusted and/or changed from an application program to a next application program and/or may be adjusted and/or changed in a corresponding application program. In this way, a common physical architecture (for example, a touch-sensitive surface) of the device may support the various application programs by using a user interface that is visualized and clear for a user.

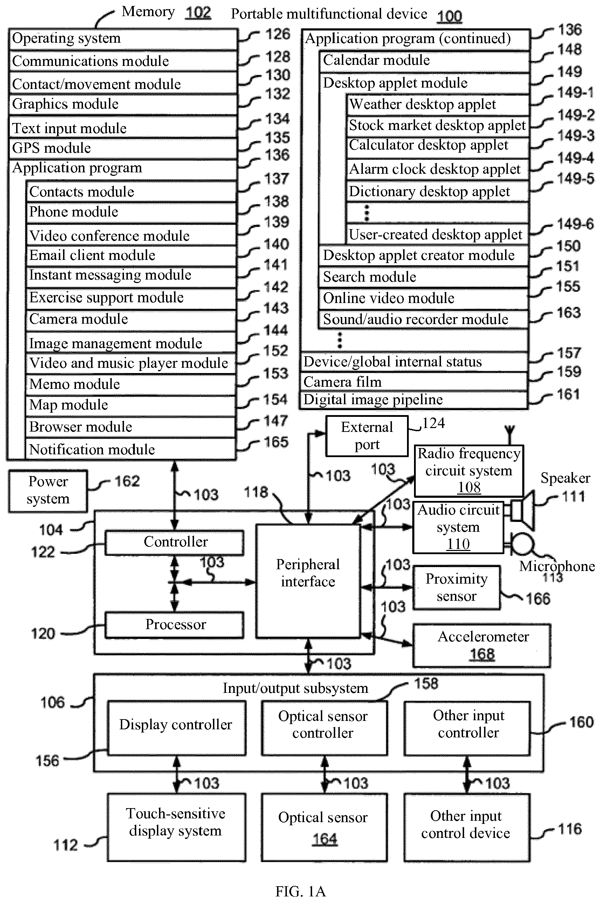

Herein an embodiment of a portable electronic device provided with a touch-sensitive display is described. FIG. 1A is a block diagram of a portable electronic device 100 provided with a touch-sensitive display 112 according to some embodiments. The touch-sensitive display 112 is sometimes referred to as a "touchscreen" for convenience, or may be referred to as or called a touch-sensitive display system, or may be referred to as a display system provided with a touch-sensitive surface (touch-sensitive surface) and a display (display). The device 100 may include a memory 102 (which may include one or more computer readable storage media), a memory controller 122, one or more processing units (CPU) 120, a peripheral interface 118, an RF circuit system 108, an audio circuit system 110, a speaker 111, a microphone 113, an input/output (I/O) subsystem 106, another input control device 116, and an external port 124. The device 100 may include one or more optical sensors 164. These components may communicate with one another through one or more communications buses or signal buses 103.

It should be understood that, the device 100 is merely an example of a portable electronic device, and the device 100 may have more or fewer components than the shown components, may combine two or more components, or may have different configurations or layouts of these components. Components shown in FIG. 1A may be implemented in a form of hardware or software or using a combination of software and hardware, and include one or more signal processing and/or application-specific integrated circuits.

The memory 102 may include a high-speed random access memory, and may further include a nonvolatile memory, such as one or more disk storage devices, a flash memory device, or another nonvolatile solid-state memory device. Access of other components (such as the CPU 120 and the peripheral interface 118) of the device 100 to the memory 102 may be controlled by the memory controller 122.

The peripheral interface 118 may be configured to couple input and output peripherals of the device to the CPU 120 and the memory 102. The one or more processors 120 run or execute various software programs and/or instruction sets that are stored in the memory 102, so as to execute various functions of the device 100 and process data. In some embodiments, the one or more processors 120 include an image signal processor and a dual-core or multi-core processor. For example, the memory 102 stores program code, and the processor 120 reads the program code in the memory 102 to execute the following operations:
determining, according to a dead reckoning technology, coordinates of a current position of the portable electronic device, a track parameter value at the current position, and a motion direction at the current position, where the track parameter value includes any one of a curvature change rate, a curvature radius change rate, a curvature, or a curvature radius, the portable electronic device moves on a preset target path, and at least two calibration points are set on the target path;
if the motion direction is from a first calibration point to a second calibration point, obtaining coordinates of the second calibration point; and
when it is detected that the track parameter value at the current position meets a preset calibration condition, correcting the coordinates of the current position to the coordinates of the second calibration point.

In some embodiments, the peripheral interface 118, the CPU 120, and the controller 122 may be implemented on a single chip, such as a chip 104. In some other embodiments, they may be implemented on independent chips.

The RF (radio frequency) circuit system 108 receives and sends RF signals, which are also called electromagnetic signals. The RF circuit system 108 converts electrical signals into electromagnetic signals/converts electromagnetic signals into electrical signals, and communicates with a communications network and another communications device using the electromagnetic signals. The RF circuit system 108 may include a well-known circuit system configured to execute these functions. The well-known circuit system includes but is not limited to an antenna system, an RF transceiver, one or more amplifiers, a tuner, one or more oscillators, a digital signal processor, a codec chipset, a subscriber identity module (SIM) card, a memory, and the like. The RF circuit system 108 may communicate with a network and another device by means of wireless communication. The network is, for example, the Internet (also referred to as the World Wide Web (WWW)), an intranet, and/or a wireless network (such as a cellular phone network, a wireless local area network (LAN), and/or a metropolitan area network (MAN)). In wireless communication, any type of multiple communications standards, protocols, and technologies may be used, including but not limited to the Global System for Mobile Communications (GSM), Enhanced Data rates for GSM Evolution (EDGE), High Speed Downlink Packet Access (HSDPA), High Speed Uplink Packet Access (HSUPA), Wideband Code Division Multiple Access (W-CDMA), Code Division Multiple Access (CDMA), Time Division Multiple Access (TDMA), Bluetooth, Wireless Fidelity (Wi-Fi) (such as IEEE 802.11a, IEEE 802.11b, IEEE 802.11g, and/or IEEE 802.11n), the Voice over Internet Protocol (VoIP), Wi-MAX, an email protocol (such as the Internet Message Access Protocol (IMAP) and/or Post Office Protocol (POP)), instant messaging (such as the Extensible Messaging and Presence Protocol (XMPP), SIP for Instant Messaging and Presence Leveraging Extensions (SIMPLE), and the Instant Messaging and Presence Service (IMPS)), and/or the short message service (SMS), or any other appropriate communications protocol, including a communications protocol that has not been developed upon the date when this document is filed.

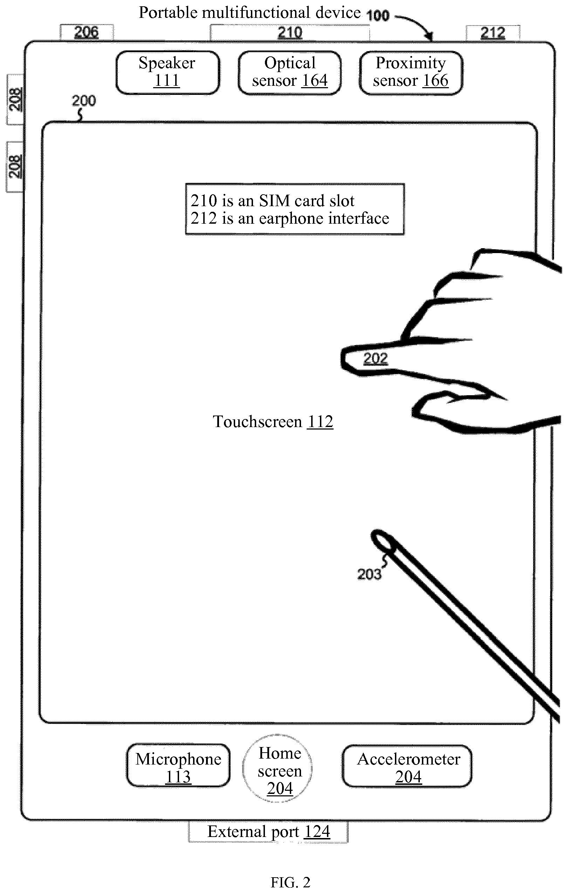

The audio circuit system 110, the speaker 111, and the microphone 113 provide an audio interface between a user and the device 100. The audio circuit system 110 receives audio data from the peripheral interface 118, converts the audio data into an electrical signal, and transmits the electrical signal to the speaker 111. The speaker 111 converts the electrical signal into an acoustic wave audible to a human being. The audio circuit system 110 further receives an electrical signal that is obtained, by conversion according to an acoustic wave, by the microphone 113. The audio circuit system 110 converts the electrical signal into audio data, and transmits the audio data to the peripheral interface 118 for processing. The audio data may be retrieved from and/or transmitted to the memory 102 and/or the RF circuit system 108 by the peripheral interface 118. In some embodiments, the audio circuit system 110 further includes a headset jack (for example, 212 in FIG. 2). The headset jack provides an interface between the audio circuit system 110 and a removable audio input/output peripheral. The peripheral is, for example, an output-only earphone or a headset provided with both an output (such as a single-earpiece or double-earpiece earphone) and an input (such as a microphone).

The I/O subsystem 106 couples the input/output peripheral of the device 100, such as the touchscreen 112 and the another input control device 116, to the peripheral interface 118. The I/O subsystem 106 may include a display controller 156 and one or more input controllers 160 applied to the another input control device. The one or more input controllers 160 receive electrical signals from the another input control device 116/sends electrical signals to the another input control device 116. The another input control device 116 may include a physical button (such as a push button or a rocker button), a dial pad, a slider switch, a joystick, a click wheel, or the like. In some alternative embodiments, the input controller 160 may be coupled to (or not coupled to) any one of the following: a keyboard, an infrared port, a USB port, or a pointer device such as a mouse. The one or more buttons (for example, 208 in FIG. 2) may include an up/down button configured to control volume of the speaker 111 and/or the microphone 113. The one or more buttons may include a push button (for example, 206 in FIG. 2).

The touch-sensitive display 112 provides an input interface and an output interface between the device and a user. The display controller 156 receives electrical signals from the touchscreen 112 and/or sends electrical signals to the touchscreen 112. The touchscreen 112 displays visual output to the user. The visual output may include graphics, text, an icon, a video, and any combination thereof (collectively referred to as "graphics"). In some embodiments, some or all visual output may be corresponding to a user interface object.

The touchscreen 112 is provided with a touch-sensitive surface, a sensor, or a sensor group that receives input from a user based on the sense of touch and/or touch contact. The touchscreen 112 and the display controller 156 (together with any associated module and/or instruction set in the memory 102) detect contact (and any movement or interruption of the contact) on the touchscreen 112, and convert the detected contact into interaction with a user interface object (such as one or more softkeys, icons, web pages, or images) that is displayed on the touchscreen 112. In an illustrative embodiment, a contact point between the touchscreen 112 and the user is corresponding to a finger of the user.

An LCD (liquid crystal display) technology, an LPD (light emitting polymer display) technology, or an LED (light emitting diode) technology may be used for the touchscreen 112. However, in another embodiment, another display technology may be used. The touchscreen 112 and the display controller 156 may detect contact and any movement or interruption of the contact, by using any technology of multiple currently known or to-be-developed future touch sensing technologies and another proximity sensor array or another component that is configured to determine one or more points in contact with the touchscreen 112. The multiple touch sensing technologies include but are not limited to capacitive, resistive, infrared, and surface acoustic wave technologies. In an illustrative embodiment, a projected mutual capacitance sensing technology is used.

The touchscreen 112 may have a video resolution greater than 100 dpi. In some embodiments, the touchscreen has a video resolution of about 160 dpi. A user may get in contact with the touchscreen 112 by using any appropriate object or accessory such as a stylus or a finger. In some embodiments, a user interface is designed to mainly work with finger-based contact and gestures. This may come with lower accuracy compared with a stylus-based input because a finger has a larger contact area on the touchscreen. In some embodiments, the device translates a finger-based rough input into a precise pointer/cursor position or command, so as to execute a user-expected action.

In some embodiments, in addition to the touchscreen, the device 100 may include a touchpad (not shown) configured to activate or deactivate a specific function. In some embodiments, the touchpad is a touch-sensitive region of the device. The touch-sensitive region is different from the touchscreen and does not display visual output. The touchpad may be a touch-sensitive surface separated from the touchscreen 112, or an extension part of a touch-sensitive surface formed by the touchscreen.

The device 100 further includes a power system 162 configured to supply power to various components. The power system 162 may include a power management system, one or more power supplies (such as a battery or an alternating current power supply (AC)), a recharging system, a power failure detection circuit, a power converter or inverter, a power status indicator (such as a light emitting diode (LED)), and any other component that is associated with power generation, management, and distribution in the portable electronic device.

The device 100 may further include one or more optical sensors 164. FIG. 1A shows an optical sensor that is coupled to an optical sensor controller 158 in the I/O subsystem 106. The optical sensor 164 may include a charge coupled device (CCD) or a complementary metal-oxide-semiconductor (CMOS) photoelectric transistor. The optical sensor 164 receives, from an environment, light projected by one or more lenses, and converts the light into data that represents an image. In combination with an imaging module 143 (also referred to as a camera module), the optical sensor 164 may capture a static image or a video. In some embodiments, the one or more optical sensors are located at the rear of the device 100, and are opposite to the touchscreen display 112 in the front of the device, so that the touchscreen display may be used as a viewfinder configured to collect a static image and/or a video image. In some embodiments, another one or more optical sensors are located in the front of the device, so that when watching another video conference participant on the touchscreen display, a user may obtain an image of the user at the same time for a video conference.

The device 100 may further include one or more proximity sensors 166. FIG. 1A shows the proximity sensor 166 that is coupled to the peripheral interface 118. In another option, the proximity sensor 166 may be coupled to the input controller 160 in the I/O subsystem 106. In some embodiments, when the electronic device is put near to an ear of a user (for example, when the user is making a phone call), the proximity sensor is turned off, and the touchscreen 112 is disabled.

The device 100 may further include one or more accelerometers 168. FIG. 1A shows the accelerometer 168 that is coupled to the peripheral interface 118. In another option, the accelerometer 168 may be coupled to the input controller 160 in the I/O subsystem 106. In some embodiments, information is displayed on the touchscreen display in a vertical view or a horizontal view based on analysis on data that is received from the one or more accelerometers. Optionally, in addition to the accelerometer 168, the device 100 further includes a magnetometer (not shown) and a GPS (or GLONASS or BeiDou or another global navigation system) receiver (not shown), which are configured to obtain position and orientation (for example, portrait or landscape) information of the device 100.

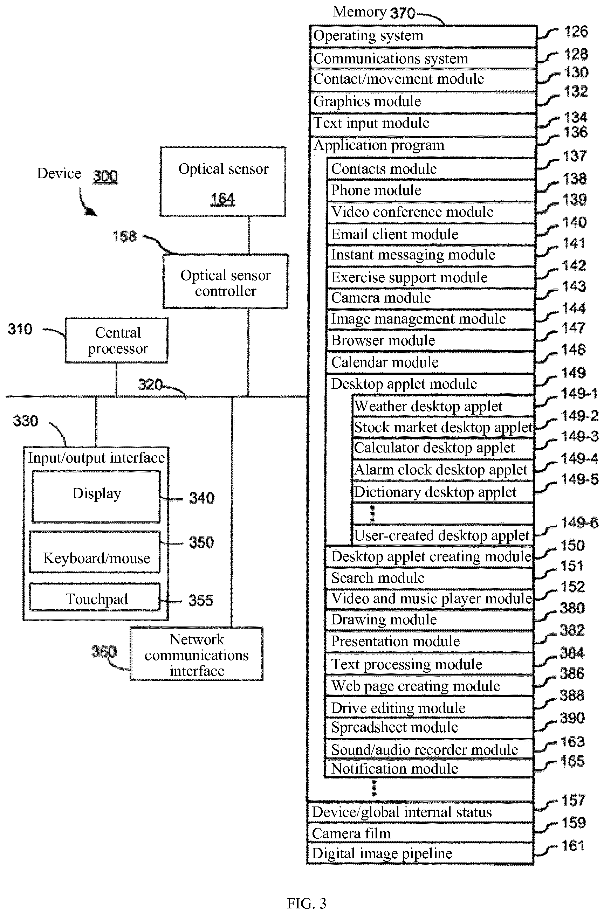

In some embodiments, software components stored in the memory 102 include an operating system 126, a communications module (or instruction set) 128, a contact/movement module (or instruction set) 130, a graphics module (or instruction set) 132, a text input module (or instruction set) 134, a global positioning system (GPS) module (or instruction set) 135, and an application program (or instruction set) 136. In addition, in some embodiments, the memory 102 stores a device/global internal status 157, as shown in FIG. 1A and FIG. 3. The device/global internal status 157 includes any one or more of the following: an active application program status, used to indicate what application programs (if any) are currently active; a display status, used to indicate what application program, view, or other information occupies each region of the touchscreen display 112; a sensor status, including information obtained from sensors of the device and the input control device 116; and position information about a position and a posture of the device.

The operating system 126 (such as Darwin, RTXC, Linux, UNIX, OS X, Windows, Android, or an embedded operating system (for example, Vx Works)) includes various software components and/or drivers that are configured to control and manage general system tasks (such as memory management, storage device control, and power management), and facilitates communication between hardware and software components. In addition, in some embodiments, the memory 102 stores a digital camera film 159 and a digital image pipeline 161.

The communications module 128 facilitates communication with another device through one or more external ports 124, and further includes various software components that are configured to process data received by the RF circuit system 108 and/or the external port 124. The external port 124 (such as a universal serial bus (USB) or a live wire) is suitable for direct coupling to another device or indirect coupling via a network (such as the Internet or a wireless LAN). In some embodiments, the external port is a multi-pin (for example, 30-pin) connector that is identical or similar to and/or compatible with a 30-pin connector applied to an iPod (a trademark of Apple Inc.) device.

The contact/movement module 130 may detect contact with the touchscreen 112 (in combination with the display controller 156) or another touch-sensitive device (such as a touchpad or a physical click wheel). The contact/movement module 130 includes multiple software components configured to execute various operations related to contact detection, for example, determining whether contact has occurred (for example, detecting a finger press event), determining whether there is a movement of the contact and tracking the movement on the entire touch-sensitive surface (for example, detecting one or more finger drag events), and determining whether the contact has terminated (for example, detecting a finger lift event or contact interruption). The contact/movement module 130 receives contact data from the touch-sensitive surface. Determining a movement of a contact point may include: determining a rate (a quantity), a velocity (a quantity and a direction), and/or an acceleration (a quantity and/or direction change) of the contact point. The movement of the contact point is represented by a series of contact data. These operations may be applied to single-point contact (such as contact with one finger) or simultaneous contact at multiple points (such as "multi-point touch"/contact with multiple fingers). In some embodiments, the contact/movement module 130 and the display controller 156 detect contact on the touchpad.

The contact/movement module 130 may detect a gesture input of a user. Different gestures on the touch-sensitive surface have different contact patterns. Therefore, a gesture may be detected by detecting a specific contact pattern. For example, detecting a single-finger tap gesture includes: detecting a finger press event; and then detecting a finger lift (lift and leave) event in a position (for example, in a position of an icon) that is the same as a position in which the finger press event is detected (or in a basically same position). For another example, detecting a finger swipe gesture on the touch-sensitive surface includes: detecting a finger push event; then detecting one or more finger drag events; and then detecting a finger lift (lift and leave) event.

The graphics module 132 includes multiple known software components configured to render and display graphics on the touchscreen 112 and another display, and includes a component configured to change strength of the displayed graphics. As used in this specification, the term "graphics" includes any object that may be displayed to a user, including but not limited to text, a web page, an icon (such as a user interface object that includes a softkey), a digital image, a video, an animation, and the like.

In some embodiments, the graphics module 132 stores to-be-used data to represent graphics. A corresponding code may be allocated to each piece of graphics. The graphics module 132 receives, from an application program or the like, one or more codes of graphics to be displayed as specified, and also receives coordinate data and other graphics attribute data when necessary; and then generates screen image data, and outputs the data to the display controller 156.

The text input module 134 that may be configured as a component of the graphics module 132 provides a soft keyboard that is configured to input text in multiple application programs (such as a contacts 137, an email 140, an instant messaging 141, a browser 147, and any other application program that requires text inputs).

The GPS module 135 determines a position of the device and provides the information for use in various application programs (for example, providing the information for a phone 138 for position-based dialing, providing the information for a camera 143 as picture/video metadata, or providing the information for an application program that provides a position-based service, such as a weather desktop applet, a local yellow page desktop applet, or a map/navigation desktop applet).

The application program 136 may include the following modules (or instruction sets) or a subset or superset thereof:
the contacts module 137 (sometimes also referred to as an address book or a contacts list);
the phone module 138;
a video conference module 139;
the email client module 140;
the instant messaging (IM) module 141;
an exercise support module 142;
the camera module 143 configured for a static image and/or a video image;
an image management module 144;
the browser module 147;
a calendar module 148;
a desktop applet module 149, which may include any one or more of the following: the weather desktop applet 149-1, a stock market desktop applet 149-2, a calculator desktop applet 149-3, an alarm clock desktop applet 149-4, a dictionary desktop applet 149-5, another desktop applet obtained by a user, or a user-created desktop applet 149-6;
a desktop applet creator module 150 that is configured to generate the user-created desktop applet 149-6;
a search module 151;
a video and music player module 152, which may include a video player module and a music player module;
a memo module 153;
a map module 154;
an online video module 155;
a sound/audio recorder module 163; and/or
a notification module 165.

An example of another application program 136 that may be stored in the memory 102 includes another text processing application program, another image editing application program, a drawing application program, a presentation application program, a JAVA-enabled application program, encryption, digital rights management, sound recognition, or sound reproduction.

In combination with the touchscreen 112, the display controller 156, the contact module 130, the graphics module 132, and the text input module 134, the contacts module 137 may be configured to manage an address book or a contacts list (for example, stored in an application program internal status 192 of the contacts module 137 in the memory 102 or a memory 370), including: adding a name to the address book; deleting a name from the address book; associating a phone number, an email address, a real-world address, or other information with a name; associating an image with a name; categorizing and sorting a name; providing a phone number or an email address to initiate and/or facilitate communication that is performed by using the phone 138, the video conference 139, the email 140, or the IM 141; and the like.

In combination with the RF circuit system 108, the audio circuit system 110, the speaker 111, the microphone 113, the touchscreen 112, the display controller 156, the contact module 130, the graphics module 132, and the text input module 134, the phone module 138 may be configured to input a character sequence that is corresponding to a phone number, access one or more phone numbers in the address book 137, modify a phone number that has been input, dial a corresponding phone number, connect a call, and disconnect or hang up when a call is completed. As described above, any one of multiple communications standards, protocols, and technologies may be used in wireless communication.

In combination with the RF circuit system 108, the audio circuit system 110, the speaker 111, the microphone 113, the touchscreen 112, the display controller 156, the optical sensor 164, the optical sensor controller 158, the contact module 130, the graphics module 132, the text input module 134, the contacts list 137, and the phone module 138, the video conference module 139 includes executable instructions that are used to initiate, connect, and terminate, according to user instructions, a video conference between a user and another one or more participants.

In combination with the RF circuit system 108, the touchscreen 112, the display controller 156, the contact module 130, the graphics module 132, and the text input module 134, the email client module 140 includes executable instructions that are used to respond to user instructions to create, send, receive, and manage emails. In combination with the image management module 144, the email client module 140 makes it very easy to create and send an email that includes a static image or a video image that is shot by the camera module 143.

In combination with the RF circuit system 108, the touchscreen 112, the display controller 156, the contact module 130, the graphics module 132, and the text input module 134, the instant messaging module 141 includes executable instructions that are used to input a character sequence corresponding to an instant message, modify a character that is previously input, transmit a corresponding instant message (for example, using the short message service (SMS) or multimedia messaging service (MMS) protocol for a phone-based instant message, or using XMPP, SIMPLE, or IMPS for an Internet-based instant message), receive an instant message, and view a received instant message. In some embodiments, a transmitted and/or received instant message may include graphics, a photo, an audio file, a video file, and/or another attachment that is supported in MMS and/or the enhanced messaging service (EMS). As used in this specification, the "instant message" is both a phone-based message (such as a message sent using SMS or MMS) and an Internet-based message (such as a message sent using XMPP, SIMPLE, or IMPS).

In combination with the RF circuit system 108, the touchscreen 112, the display controller 156, the contact module 130, the graphics module 132, the text input module 134, the GPS module 135, the map module 154, and a music player module 146, the exercise support module 142 includes executable instructions that are used to: create an exercise (for example, one with a time, distance, and/or calorie consumption goal); communicate with an exercise sensor (a sports device); receive exercise sensor data; calibrate a sensor configured to monitor an exercise; select and play music for an exercise; and display, store, and transmit exercise data.

In combination with the touchscreen 112, the display controller 156, the optical sensor 164, the optical sensor controller 158, the contact module 130, the graphics module 132, the digital image pipeline 161 (which converts original data that comes from the optical sensor into a final image or video), and the image management module 144, the camera module 143 includes executable instructions that are used to capture a static image or a video (including a video stream) and store it into the memory 102 (for example, in the digital camera film 159), modify a feature of a static image or a video, or delete a static image or a video from the memory 102 (for example, from the digital camera film 159).

In combination with the touchscreen 112, the display controller 156, the contact module 130, the graphics module 132, the text input module 134, and the camera module 143, the image management module 144 includes executable instructions that are used to arrange, modify (for example, edit), or manipulate in another manner, tag, delete, present (for example, in a digital slideshow or album), and store a static image and/or a video image (including a static image and/or a video image stored in the camera film 159).

In combination with the RF circuit system 108, the touchscreen 112, the display system controller 156, the contact module 130, the graphics module 132, and the text input module 134, the browser module 147 includes executable instructions that are used to browse the Internet (including searching, linking to, receiving, and displaying a web page or a part of the web page, and linking to an attachment of a web page or another file) according to user instructions.

In combination with the RF circuit system 108, the touchscreen 112, the display system controller 156, the contact module 130, the graphics module 132, the text input module 134, the email client module 140, and the browser module 147, the calendar module 148 includes executable instructions that are used to create, display, modify, and store a calendar or calendar-associated data (such as a calendar entry and a to-do task list) according to user instructions.

In combination with the RF circuit system 108, the touchscreen 112, the display system controller 156, the contact module 130, the graphics module 132, the text input module 134, and the browser module 147, the desktop applet module 149 is a micro application program that may be downloaded and used by a user (such as the weather desktop applet 149-1, the stock market desktop applet 149-2, the calculator desktop applet 149-3, the alarm clock desktop applet 149-4, or the dictionary desktop applet 149-5), or a micro application program that is created by the user (such as the user-created desktop applet 149-6). In some embodiments, the desktop applet includes an HTML (Hypertext Markup Language) file, a CSS (cascading style sheet) file, and a JavaScript file. In some embodiments, the desktop applet includes an XML (Extensible Markup Language) file and a JavaScript file (such as the Yahoo! desktop applet).

In combination with the RF circuit system 108, the touchscreen 112, the display system controller 156, the contact module 130, the graphics module 132, the text input module 134, and the browser module 147, the desktop applet creator module 150 may be used by a user to create a desktop applet (for example, transferring a user-specified part of a web page to the desktop applet).

In combination with the touchscreen 112, the display system controller 156, the contact module 130, the graphics module 132, and the text input module 134, the search module 151 includes executable instructions that are used to search in the memory 102 according to user instructions for text, music, sound, image, video, and/or other files that match one or more search criteria (such as one or more search words specified by a user).

In combination with the touchscreen 112, the display system controller 156, the contact module 130, the graphics module 132, the audio circuit system 110, the speaker 111, the RF circuit system 108, and the browser module 147, the video and music player module 152 includes executable instructions that allow a user to download and play recorded music and another sound file that are stored in one or more file formats (such as an MP3 or AAC file), and executable instructions that are used to display, present, or play in another manner a video (for example, on the touchscreen 112 or on an external display that is connected through the external port 124). In some embodiments, the device 100 may include functionality of an MP3 player.

In combination with the touchscreen 112, the display controller 156, the contact module 130, the graphics module 132, and the text input module 134, the memo module 153 includes executable instructions that are used to create and manage a memo, a to-do task list, and the like according to user instructions.

In combination with the RF circuit system 108, the touchscreen 112, the display system controller 156, the contact module 130, the graphics module 132, the text input module 134, the GPS module 135, and the browser module 147, the map module 154 may be configured to receive, display, modify, and store a map and map-associated data (such as a driving route, data of a specific position, a nearby store, or another point of interest, and other position-based data) according to user instructions.

In combination with the touchscreen 112, the display system controller 156, the contact module 130, the graphics module 132, the audio circuit system 110, the speaker 111, the RF circuit system 108, the text input module 134, the email client module 140, and the browser module 147, the online video module 155 includes instructions that allow a user to access, browse, receive (for example, streaming receiving and/or downloading), play (for example, on the touchscreen or on an external display that is connected through the external port 124), and send an email that has a link to a specific online video, and manage in another manner an online video that is in one or more file formats (such as H.264). In some embodiments, the instant messaging module 141, instead of the email client module 140, is configured to send a link that is to a specific online video.

In combination with the touchscreen 112, the display system controller 156, the contact module 130, the graphics module 132, the audio circuit system 110, the speaker 111, and the microphone 113, the sound/audio recorder module 163 includes an executable instruction that allows a user to record audio (such as sound) in one or more file formats (such as an MP3 or AAC file), and executable instructions that are used to present or in another manner, play the recorded audio file.

In combination with the touchscreen 112, the display system controller 156, the contact module 130, and the graphics module 132, the notification module 165 includes an executable instruction that displays a notification or an alert (such as an incoming message, an incoming call, a calendar event reminder, or an application program event) on the touchscreen 112.

Each of the foregoing modules and application programs is corresponding to a set of executable instructions used to execute one or more of the foregoing functions and the methods introduced in this application (such as a computer-implemented method and another information processing method that are described in this specification). These modules (or instruction sets) do not need to be implemented as separate software programs, procedures, or modules. Therefore, various subsets of these modules may be combined or re-arranged in another manner in various embodiments. In some embodiments, the memory 102 may store a subset of the foregoing modules and data structures. In addition, the memory 102 may store another module and data structure that are not described above.

In some embodiments, the device 100 is such a device that operations of a set of functions predefined on the device are uniquely executed by the touchscreen and/or the touchpad. Using a touchscreen and/or a touchpad as a main input control device for an operation of the device 100 can reduce a quantity of physical input control devices (such as a push button and a dial pad) on the device 100.

The set of predefined functions that may be uniquely executed by the touchscreen and/or the touchpad includes navigation between user interfaces. In some embodiments, when the touchpad is touched by a user, the device 100 is navigated from any user interface that may be displayed on the device 100 to a primary menu, a main menu, or a root menu. In such embodiments, the touchpad may be referred to as a "menu button". In some other embodiments, the menu button may be a physical push button or another physical input control device, instead of the touchpad.

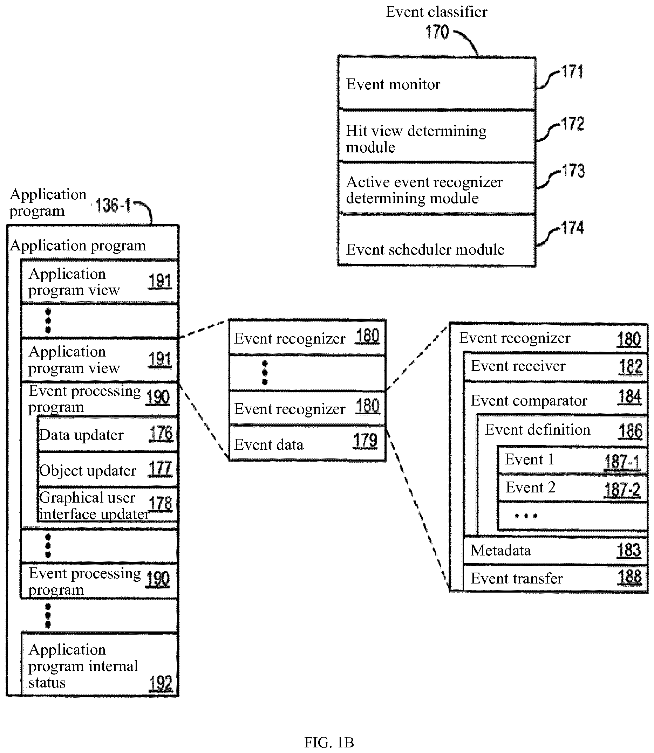

FIG. 1B is a block diagram of illustrative components configured for event processing according to some embodiments. In some embodiments, the memory 102 (in FIG. 1A) or the memory 370 (in FIG. 3) include an event classifier 170 (for example, in the operating system 126) and a corresponding application program 136-1 (for example, any one of the foregoing application programs 137-151, 155, and 380-390).

The event classifier 170 receives event information and determines an application program 136-1 to which the event information needs to be transferred and an application program view 191 of the application program 136-1. The event classifier 170 includes an event monitor 171 and an event scheduler module 174. In some embodiments, the application program 136-1 includes an application program internal status 192. The application program internal status 192 indicates a current application program view that is displayed on the touch-sensitive display 112 when the application program is active or is being executed. In some embodiments, the device/global internal status 157 is used by the event classifier 170 to determine which one or more application programs are currently active, and the application program internal status 192 is used by the event classifier 170 to determine the application program view 191 that the event information needs to be transferred to.

In some embodiments, the application program internal status 192 includes other information, such as one or more of the following: recovery information to be used when recovery of the application program 136-1 is executed, user interface status information that indicates information being displayed by the application program 136-1 or information ready to be displayed by the application program 136-1, a status queue that enables a user to return to a previous status or view of the application program 136-1, and a repetition/cancellation queue of a previous action taken by the user.

The event monitor 171 receives event information from the peripheral interface 118. The event information includes information about a subevent (for example, a user touch on the touch-sensitive display 112, as a part of a multi-point touch gesture). The peripheral interface 118 transmits information that the peripheral interface 118 receives from the I/O subsystem 106 or a sensor (such as the proximity sensor 166), the accelerometer 168, and/or the microphone 113 (by using the audio circuit system 110). Information received by the peripheral interface 118 from the I/O subsystem 106 includes information that comes from the touch-sensitive display 112 or the touch-sensitive surface.

In some embodiments, the event monitor 171 sends a request to the peripheral interface 118 at a predetermined interval. In response, the peripheral interface 118 transmits event information. In another embodiment, the peripheral interface 118 transmits event information only when there is a significant event (for example, receiving an input whose noise is higher than a predetermined noise threshold and/or receiving an input that exceeds predetermined duration).

In some embodiments, the event classifier 170 further includes a hit view determining module 172 and/or an active event recognizer determining module 173.

When the touch-sensitive display 112 displays more than one view, the hit view determining module 172 provides a software procedure used to determine that a subevent has occurred somewhere in one or more views. The view includes a control and another component that are visible to a user on the display.

Another aspect of a user interface associated with an application program is a set of views, which are sometimes referred to as application program views or user interface windows in this specification. In the views, information is displayed, and a touch-based gesture is generated. In the views, an application program view (of a corresponding application program) in which a touch is detected may be corresponding to a programming level in a programmed or view hierarchical structure of the application program. For example, in the views, a lowest-level view in which a touch is detected may be referred to as a hit view, and an event set recognized as a correct input may be at least partially determined based on the hit view of an initial touch that starts with a touch-based gesture. The hit view determining module 172 receives information related to a subevent of a touch-based gesture. When the application program has multiple views that are organized in a hierarchical structure, the hit view determining module 172 recognizes the hit view as a lowest view that is in the hierarchical structure and that should process the subevent. In most cases, the hit view is a lowest-level view in which an initial subevent (that is, the first subevent in a subevent sequence that forms an event or a potential event) occurs. Once the hit view is recognized by the hit view determining module, the hit view generally receives all subevents related to the same touch or a same input source for which the hit view is recognized as a hit view.

The active event recognizer determining module 173 determines which one or more views that are in the view hierarchical structure should receive a specific subevent sequence. In some embodiments, the active event recognizer determining module 173 determines that only the hit view should receive the specific subevent sequence. In another embodiment, the active event recognizer determining module 173 determines that all views including a physical position of the subevent are active involved views, and therefore determines that all the active involved views should receive the specific subevent sequence. In another embodiment, even if a touch subevent is completely restricted to a region associated with a specific view, a higher view in the hierarchical structure is still kept as an active involved view.

The event scheduler module 174 schedules event information to an event recognizer (such as an event recognizer 180). In an embodiment including the active event recognizer determining module 173, the event scheduler module 174 transfers the event information to the event recognizer determined by the active event recognizer determining module 173. In some embodiments, the event scheduler module 174 stores the event information in an event queue, and the event information is retrieved by a corresponding event receiver module 182.

In some embodiments, the operating system 126 includes the event classifier 170. Alternatively, the application program 136-1 includes the event classifier 170. In another embodiment, the event classifier 170 is an independent module, or is a part of another module (such as the contact/movement module 130) that is stored in the memory 102.

In some embodiments, the application program 136-1 includes multiple event processing programs 190 and one or more application program views 191, each including instructions used to process a touch event that occurs in a corresponding view of a user interface of the application program. Each application program view 191 of the application program 136-1 includes one or more event recognizers 180. Generally, a corresponding application program view 191 includes multiple event recognizers 180. In another embodiment, one or more of the event recognizers 180 are a part of an independent module. The independent module is, for example, a user interface toolkit (not shown) or a higher-level object from which the application program 136-1 inherits a method and another feature. In some embodiments, a corresponding event processing program 190 includes one or more of the following: a data updater 176, an object updater 177, a GUI updater 178, and/or event data 179 that is received from the event classifier 170. The event processing program 190 may update the application program internal status 192 by using or calling the data updater 176, the object updater 177, or the GUI updater 178. Alternatively, one or more of the application program views 191 include one or more corresponding event processing programs 190. In addition, in some embodiments, one or more of the data updater 176, the object updater 177, or the GUI updater 178 are included in a corresponding application program view 191.

A corresponding event recognizer 180 receives event information (such as the event data 179) from the event classifier 170 and identifies an event according to the event information. The event recognizer 180 includes an event receiver 182 and an event comparator 184. In some embodiments, the event recognizer 180 further includes at least one subset of the following: metadata 183, and an event transfer instruction 188 (which may include a subevent transfer instruction).

The event receiver 182 receives event information from the event classifier 170. The event information includes information about a subevent, such as a touch or a touch movement. According to the subevent, the event information further includes other information, such as a position of the subevent. When the subevent involves a touch movement, the event information may further include a rate and a direction of the subevent. In some embodiments, an event includes rotating by the device from one orientation to another orientation (for example, rotating from a portrait orientation to a landscape orientation, or vice versa), and the event information includes corresponding information about a current orientation (also referred to as a device posture) of the device.

The event comparator 184 compares the event information with a predefined event or subevent definition, and based on the comparison, determines an event or a subevent, or determines or updates a status of an event or a subevent. In some embodiments, the event comparator 184 includes an event definition 186. The event definition 186 includes a definition (such as a predefined subevent sequence) of an event, for example, an event 1 (187-1), an event 2 (187-2), or the like. In some embodiments, a subevent of an event 187 includes, for example, touch start, touch termination, touch movement, touch cancellation, and multi-point touch. In an example, a definition of the event 1 (187-1) is a double-tap on a displayed object. For example, the double-tap includes the first touch (touch start) with preset duration on the displayed object, the first lift (touch termination) with preset duration, the second touch (touch start) with preset duration on the displayed object, and the second lift (touch termination) with preset duration. In another example, a definition of the event 2 (187-2) is a drag of a displayed object. For example, the drag includes a touch (or contact) with preset duration on the displayed object, a movement of the touch on the touch-sensitive display 112, and a lift of the touch (touch termination). In some embodiments, the event further includes information used for one or more associated event processing programs 190.

In some embodiments, the event definition 186 includes a definition used for an event about a corresponding user interface object. In some embodiments, the event comparator 184 executes a hit test to determine which user interface object is associated with a subevent. For example, in an application program view in which three user interface objects are displayed on the touch-sensitive display 112, when detecting a touch on the touch-sensitive display 112, the event comparator 184 executes a hit test to determine which one of the three user interface objects is associated with the touch (the subevent). If each displayed object is associated with a corresponding event processing program 190, the event comparator determines, by using a result of the hit test, which event processing program 190 should be activated. For example, the event comparator 184 selects an event processing program associated with an object and a subevent that trigger the hit test.

In some embodiments, a definition of a corresponding event 187 further includes a delay action. The delay action delays transfer of event information until it has been determined that a subevent sequence is indeed corresponding to or is indeed not corresponding to an event type of the event recognizer.

When a corresponding event recognizer 180 determines that a subevent string does not match any event in the event definition 186, the corresponding event recognizer 180 enters an event impossible, event failure, or event end state, and then the corresponding event recognizer 180 ignores a subsequent subevent of the touch-based gesture. In this case, another event recognizer (if any) that is kept active for the hit view continues to track and process an ongoing subevent of the touch-based gesture.

In some embodiments, a corresponding event recognizer 180 includes metadata 183 that has a configurable attribute, flag, and/or list indicating how an event transfer system should execute transfer of a subevent of an active involved event recognizer. In some embodiments, the metadata 183 includes a configurable attribute, flag, and/or list indicating how event recognizers may interact with one another. In some embodiments, the metadata 183 includes a configurable attribute, flag, and/or list indicating a level of a change about whether a subevent is transferred to a view or a programmed hierarchical structure.

In some embodiments, when one or more specific subevents of an event are recognized, a corresponding event recognizer 180 activates an event processing program 190 associated with the event. In some embodiments, the corresponding event recognizer 180 transfers event information associated with the event to the event processing program 190. Activating the event processing program 190 is different from sending (and delaying sending) a subevent to a corresponding hit view. In some embodiments, the event recognizer 180 throws a flag associated with the recognized event, and the event processing program 190 associated with the flag receives the flag and executes a predefined procedure.

In some embodiments, the event transfer instruction 188 includes a subevent transfer instruction that transfers event information of a subevent but does not activate an event processing program. On the contrary, the subevent transfer instruction transfers the event information to an event processing program associated with a subevent string or transfers the event information to an active involved view. The event processing program associated with the subevent string or the active involved view receives the event information and executes a predetermined procedure.

In some embodiments, the data updater 176 creates and updates data used in the application program 136-1. For example, the data updater 176 updates a phone number used in the contacts module 137 or a video file stored and used in a video player module 145. In some embodiments, the object updater 177 creates and updates an object used in the application program 136-1. For example, the object updater 177 creates a new user interface object or updates a position of a user interface object. The GUI updater 178 updates a GUI. For example, the GUI updater 178 prepares display information and sends the information to the graphics module 132, so as to display the information on the touch-sensitive display.

In some embodiments, the event processing program 190 includes or has access permission to the data updater 176, the object updater 177, and the GUI updater 178. In some embodiments, the data updater 176, the object updater 177, and the GUI updater 178 are included in a single module of a corresponding application program 136-1 or application program view 191. In another embodiment, the data updater 176, the object updater 177, and the GUI updater 178 are included in two or more software modules.

It should be understood that the foregoing discussion about user touch event processing on the touch-sensitive display is also applicable to another form of user input that uses an input device to operate the electronic device 100 (not all user inputs are initiated on the touchscreen), for example, a coordinated mouse movement and mouse button press (with or without one or more keyboard presses or holds), a user movement, tap, drag, scroll, or the like on the touchpad, a stylus input, a device movement, an oral instruction, a detected eye movement, a biological characteristic input, and/or any combination thereof. Such inputs may be used as inputs corresponding to subevents that define a to-be-recognized event.

FIG. 2 is a portable electronic device 100 provided with a touchscreen 112 according to some embodiments. The touchscreen may display one or more graphics on a user interface (UI) 200. In this embodiment and other embodiments introduced below, a user may make a gesture on graphics by using, for example, one or more fingers 202 (not drawn in proportion in the figure) or one or more styluses 203 (not drawn in proportion in the figure), to select one or more of the graphics. In some embodiments, when the user interrupts contact with the one or more graphics, the one or more graphics are selected. In some embodiments, the gesture may include a single- or multi-time tap, a single- or multi-time slide (from left to right, from right to left, upwards, and/or downwards), and/or a flick (from right to left, from left to right, upwards, and/or downwards) of a finger that is already in contact with the device 100. In some embodiments, graphics are not selected upon unintentional contact with the graphics. For example, when a gesture corresponding to a selection is a tap, a corresponding application program is not selected upon a swipe gesture on an application program icon.

The device 100 may further include one or more physical buttons, such as a "home screen" or a menu button 204. As described above, the menu button 204 may be configured to navigate to any application program 136 in a set of application programs that may run on the device 100. Alternatively, in some embodiments, the menu button is implemented as a softkey on a GUI displayed on the touchscreen 112.

In an embodiment, the device 100 includes the touchscreen 112, the menu button 204, a push button 206 configured to power on or power off the device and lock the device, (one or more) volume adjustment buttons 208, a subscriber identity module (SIM) card slot 210, a headset jack 212, and an interconnection/charge external port 124. The push button 206 may be configured to: power on or power off the device by pressing the button and holding the button in a pressed-down state for a predefined time interval; lock the device by pressing the button and releasing the button before the predefined time interval elapses; and/or unlock the device or initiate an unlock procedure. In an alternative embodiment, the device 100 may further receive, by using a microphone 113, voice inputs used to activate or deactivate some functions.

FIG. 3 is a block diagram of an illustrative electronic device provided with a display and a touch-sensitive surface according to some embodiments. The device 300 does not need to be portable. In some embodiments, the device 300 is a laptop computer, a desktop computer, a tablet computer, a multimedia player device, a navigation device, an education device (such as a children's study toy), a game system, or a control device (such as a home or industrial controller). The device 300 generally includes one or more processing units (CPU) 310, one or more networks or other communications interfaces 360, a memory 370, and one or more communications buses 320 configured to interconnect these components. In some embodiments, the processing unit 310 includes an image signal processor and a dual-core or multi-core processor. The communications bus 320 may include a circuit system (sometimes referred to as a chipset) that interconnects system components and controls communication between the system components. The device 300 includes an input/output (I/O) interface 330 provided with a display 340. The display 340 is generally a touchscreen display. The I/O interface 330 may further include a keyboard and/or mouse (or another pointing device) 350, and a touchpad 355. The device 300 further includes an optical sensor 164 and an optical sensor controller 158. The memory 370 includes a high-speed random access memory, such as a DRAM, an SRAM, a DDR RAM, or another random access solid-state memory device; and may include a nonvolatile memory, such as one or more magnetic disk storage devices, optical disc storage devices, flash memory devices, or other nonvolatile solid-state storage devices. Optionally, the memory 370 may include one or more storage devices that are positioned from the CPU 310 in a remote manner. In some embodiments, the memory 370 stores programs, modules, and data structures similar to the programs, modules, and data structures that are stored in the memory 102 of the portable electronic device 100 (FIG. 1), or a subset of the programs, modules, and data structures. In addition, the memory 370 may store another program, module, and data structure that do not exist in the memory 102 of the portable electronic device 100. For example, the memory 370 of the device 300 may store a drawing module 380, a presentation module 382, a text processing module 384, a web page creating module 386, a drive editing module 388, and/or a spreadsheet module 390. However, the memory 102 of the portable electronic device 100 (FIG. 1) may not store these modules.

Each of the foregoing recognized components in FIG. 3 may be stored in one or more memory devices that are mentioned above. Each of the foregoing recognized modules is corresponding to a set of instructions used to execute the foregoing functions. The foregoing recognized modules or programs (that is, instruction sets) do not need to be implemented as separate software programs, procedures, or modules. Therefore, various subsets of these modules may be combined or re-arranged in another manner in various embodiments. In some embodiments, the memory 370 may store a subset of the foregoing modules and data structures. In addition, the memory 370 may store another module and data structure that are not described above.

Now attention is shifted to an embodiment of a user interface ("UI") that can be implemented on the portable electronic device 100.

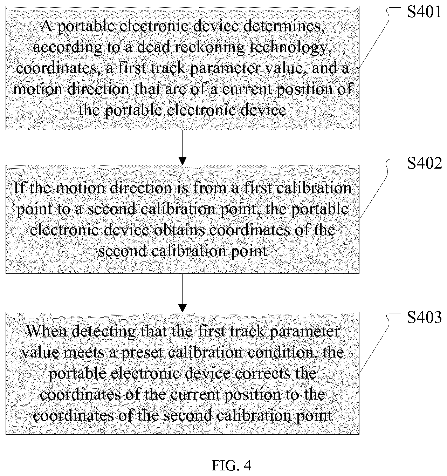

Referring to FIG. 4, FIG. 4 is a calibration method based on a dead reckoning technology according to an embodiment of the present invention. In this embodiment of the present invention, the method includes the following steps.

S401: A portable electronic device determines, according to the dead reckoning technology, coordinates of a current position of the portable electronic device, a track parameter value at the current position, and a motion direction at the current position.

Specifically, the portable electronic device moves on a target path that is preset on an electronic map. The target path may be any path input by a user on the electronic map or any path planned by a navigation application program on the electronic map. At least two calibration points are set on the target path. The calibration points are used to represent points that are on the target path and at which a track parameter value suddenly changes. When the dead reckoning technology is a pedestrian dead reckoning technology, before moving from a start position of the target path, the portable electronic device first corrects coordinates of the start position and obtains initial step length information, so as to ensure input correctness of the dead reckoning technology and ensure positioning accuracy of the dead reckoning technology. The coordinates of the start position may be determined by using a method such as a GPS positioning method or a Wi-Fi positioning or Bluetooth positioning algorithm. This is not limited in the present invention. The initial step length information may be a preset default value or obtained by calculation in a previous positioning procedure. The portable electronic device obtains output data of a built-in sensor (for example, at least one of an accelerometer, a gyroscope, or a geomagnetic sensor) to obtain a motion track of the portable electronic device, and determines, by using the initial step length information and the dead reckoning technology, the coordinates of the current position of the portable electronic device on the electronic map. The coordinates of the current position herein are obtained by the portable electronic device according to the dead reckoning technology. The track parameter value at the current position of the portable electronic device is also obtained according to the dead reckoning technology. The track parameter value includes any one of a curvature change rate, a curvature radius change rate, a curvature, or a curvature radius. Each point on the motion track is corresponding to a curvature, a curvature radius, a curvature change rate, or a curvature radius change rate. A track parameter value used to extract the calibration points is preferably a curvature change rate or a curvature radius change rate.

It may be understood that, the motion direction in this embodiment of the present invention is a relative motion direction and does not involve an absolute motion direction. For example, when the portable electronic device moves from A to B, the motion direction is recorded as from A to B; when the portable electronic device moves from B to A, the motion direction is recorded as from B to A. It should be noted that, for convenience of processing, the start position and a destination position of the target path are considered as calibration points in this embodiment of the present invention.

S402: If the motion direction is from a first calibration point to a second calibration point, the portable electronic device obtains coordinates of the second calibration point.

The motion direction indicates a motion trend of the portable electronic device and is not a precise geographic position direction. For example, when the portable electronic device moves between the first calibration point and the second calibration point, if the motion direction of the portable electronic device is from the first calibration point to the second calibration point, the first calibration point is a previous calibration point, and the second calibration point is a next calibration point; if the motion direction of the portable electronic device is from the second calibration point to the first calibration point, the second calibration point is a previous calibration point, and the first calibration point is a next calibration point. The portable electronic device may measure the motion direction by using a built-in gyroscope sensor. Coordinates of the first calibration point, the coordinates of the current position, and the coordinates of the second calibration point may be latitude and longitude coordinates, two-dimensional coordinates, or coordinates set on the electronic map. This is not limited in the present invention. Generally, the electronic map has stored coordinates of each position, and the coordinates may be directly called for determining coordinates of a position.

S403: When detecting that the track parameter value at the current position meets a preset calibration condition, the portable electronic device corrects the coordinates of the current position to the coordinates of the second calibration point.

Specifically, the coordinates of the current position that are obtained by the portable electronic device by using the dead reckoning technology increase as time increases. When the track parameter value at the current position of the portable electronic device meets the preset calibration condition, where the calibration condition is used to determine whether the portable electronic device has reached the second calibration point, if the calibration condition is met, the coordinates of the current position of the portable electronic device are corrected to the coordinates of the second calibration point. The portable electronic device moves on the target path. When at least two calibration points are set on the target path, the portable electronic device performs, according to the foregoing calibration method, calibration once each time the portable electronic device passes a subpath. In this way, a positioning error of the portable electronic device can be effectively reduced.

In conclusion, by implementing this embodiment of the present invention, a portable electronic device moves on a preset target path, where calibration points are set on the target path. The portable electronic device obtains a current position by reckoning according to a dead reckoning technology. When a track parameter value at the current position meets a preset calibration condition, coordinates of the current position are corrected to coordinates of a next calibration point. In this way, a positioning error of the dead reckoning technology can be rectified at the calibration point, thereby avoiding accumulation of the positioning error and improving positioning accuracy of the dead reckoning technology.

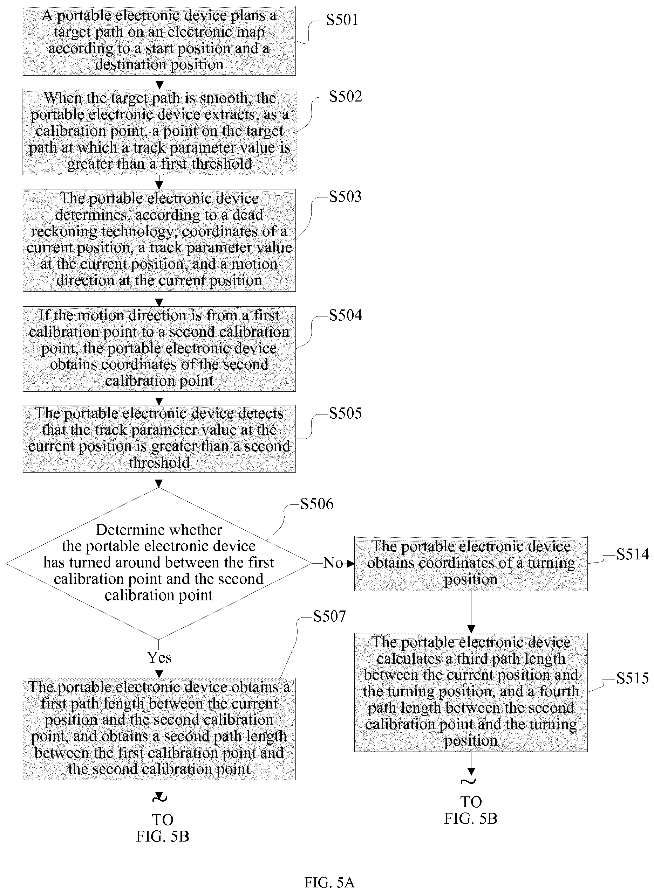

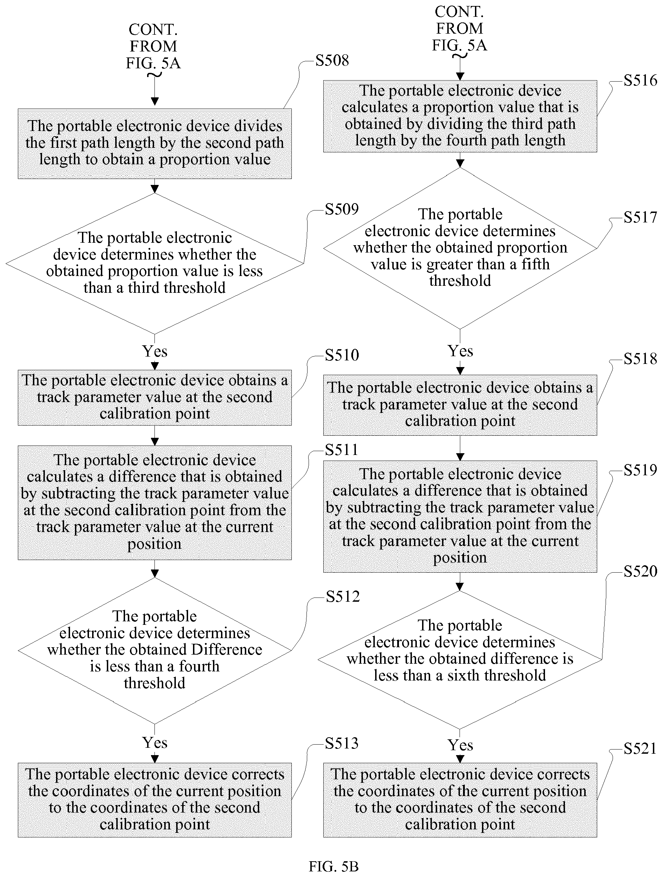

Referring to FIG. 5A and FIG. 5B, FIG. 5A and FIG. 5B is another schematic flowchart of a calibration method based on a dead reckoning technology according to an embodiment of the present invention. In this embodiment of the present invention, the method includes the following steps.

S501: A portable electronic device plans a target path on an electronic map according to a start position and a destination position.

Specifically, the portable electronic device starts a map navigation program, displays the electronic map on a user interface, and obtains the target path according to the start position and the destination position and by using a preset path planning algorithm. The start position may be manually input by a user, or obtained by a user terminal by self-positioning according to a preset positioning algorithm, such as GPS positioning, Wi-Fi positioning, or Bluetooth positioning. It should be noted that, the target path may alternatively be any path input by the user on the electronic map. This is not limited in the present invention.

S502: When the target path is continuous, the portable electronic device extracts as a calibration point a point on the target path at which a track parameter value is greater than a first threshold.

Specifically, that the target path is smooth indicates that the target path has no point at which a sharp turn of the track parameter value occurs. If the target path is considered as a function curve in two-dimensional coordinates, a feature of the function curve is that the function curve is differentiable everywhere. The track parameter value includes any one of a curvature change rate, a curvature radius change rate, a curvature, or a curvature radius. Using the curvature change rate as an example, a procedure of extracting, by the portable electronic device, the point on the target path at which a track parameter value is greater than the first threshold may be: performing sampling on the target path according to a preset time interval to obtain multiple points, calculating curvature change rate values at the points, and using a point at which a curvature change rate value is greater than the first threshold as a calibration point. When there are consecutive points meeting a condition that a curvature change rate value is greater than the first threshold, the multiple consecutive calibration points are combined into one calibration point. A method for combination may be: using a point with a largest curvature change rate value in the multiple calibration points as the calibration point obtained after combination, or using a calibration point in a middle position in the multiple calibration points as the calibration point obtained after combination.

It may be understood that, when the portable electronic device moves along the target path for the first time, the portable electronic device needs to calculate a track parameter value at each point on the target path, use a point at which a track parameter value is greater than the first threshold as a calibration point, and store coordinates of the calibration point. When the portable electronic device moves along the target path again, the portable electronic device does not need to calculate the track parameter value at each point, but directly calls the stored coordinates of the calibration point. It should be noted that, for convenience of processing, both the start position and the destination position are considered as calibration points in this embodiment.

In some embodiments of the present invention, optionally, when the target path is non-smooth, a turning point on the target path is extracted as a calibration point.

Specifically, that the target path is non-smooth indicates that there is a point the target path at which a sharp turn of the track parameter value occurs. If the target path is considered as a function curve in two-dimensional coordinates, the turning point is a non-differentiable point in the function curve. The target path may be obtained by combination of multiple line segments and/or multiple curves. This is not limited in the present invention. For example, a non-smooth target path includes three line segments, the three line segments intersect with one another to form two intersecting points, and the two intersecting points are used as calibration points of the target path. It should be noted that, the start position and the destination position of the target path are also considered as calibration points, and then the target path has four calibration points.

When a track parameter value at an intersecting point of two adjacent line segments is calculated, an arc may be obtained by means of smoothing processing, and then a value of a curvature change rate or a value of a curvature radius change rate of the intersecting point is calculated.

In some embodiments of the present invention, preferably, if the non-smooth target path includes multiple line segments, an included angle of every two adjacent line segments of the target path is calculated, and an intersecting point formed by two adjacent line segments whose angle value is greater than a preset angle threshold is selected as a calibration point. For example, assuming that the angle threshold is 90°, an intersecting point formed by two adjacent line segments may be considered as a calibration point of the target path only when an included angle of the two adjacent line segments is greater than or equal to 90°, so as to reduce a quantity of calibration points and reduce an amount of calculation for calibration.

S503: The portable electronic device determines, according to the dead reckoning technology, coordinates of a current position, a track parameter value at the current position, and a motion direction at the current position.

Specifically, the portable electronic device obtains output data of a built-in sensor (for example, at least one of an accelerometer, a gyroscope, or a geomagnetic sensor) to obtain a motion track, and determines, by using the dead reckoning technology, the coordinates of the current position of the portable electronic device on the electronic map. The coordinates of the current position herein are obtained by the portable electronic device according to the dead reckoning technology. When the dead reckoning technology is a pedestrian dead reckoning technology, step length information of the user needs to be further considered when the coordinates of the current position are determined. The step length information of the user is different in different motion modes. The step length information may be obtained by training on a path. The track parameter value at the current position of the portable electronic device is also obtained according to the dead reckoning technology. The track parameter value includes the curvature change rate or the curvature radius change rate. Each point on the motion track is corresponding to a value of the curvature change rate or a value of the curvature radius change rate.

S504: If the motion direction is from a first calibration point to a second calibration point, the portable electronic device obtains coordinates of the second calibration point.

Specifically, the motion direction indicates a motion trend. The portable electronic device moves on the target path. The calibration points on the target path divide the target path into multiple subpaths. A motion procedure of the portable electronic device is considered based on each subpath separately. It is assumed that the portable electronic device moves on a subpath between the first calibration point and the second calibration point. If the motion direction at the current position is oriented towards the first calibration point, it is determined that the first calibration point is a next calibration point, and the second calibration point is a previous calibration point; if the motion direction at the current position is oriented towards the second calibration point, the second calibration point is a next calibration point, and the first calibration point is a previous calibration point.

S505: The portable electronic device detects that the track parameter value at the current position is greater than a second threshold.

Specifically, the portable electronic device obtains the track parameter value that is of the current position and that is obtained by the dead reckoning technology. The track parameter value includes any one of a curvature change rate, a curvature radius change rate, a curvature, or a curvature radius. When it is detected that the track parameter value at the current position is greater than the second threshold, S506 is executed; otherwise, S503 continues to be executed.

S506: The portable electronic device determines whether the portable electronic device has turned around between the first calibration point and the second calibration point.

That the portable electronic device has turned around between the first calibration point and the second calibration point means: The motion direction at the current position of the portable electronic device is from the first calibration point to the second calibration point, and that the portable electronic device has turned around at a position before the current position is that the motion direction becomes from the second calibration point to the first calibration point. The portable electronic device may identify the motion direction by using a built-in sensor (an accelerometer, a gyroscope, or a geomagnetic sensor), and determine, according to the motion direction, whether the portable electronic device has turned around between the first calibration point and the second calibration point. If the portable electronic device has not turned around between the first calibration point and the second calibration point, S507 is executed; otherwise, S514 is executed.

S507: The portable electronic device obtains a first path length between the current position and the second calibration point, and obtains a second path length between the first calibration point and the second calibration point.

Specifically, the first path length indicates a length of a corresponding path between the current position and the second calibration point on the target path. The second path length indicates a length of a corresponding path between the first calibration point and the second calibration point on the target path. The path may be a straight line or a curve on the target path. A specific shape is determined according to a shape of the target path. The portable electronic device obtains the coordinates of the current position that are obtained according to the dead reckoning technology, and obtains the coordinates of the preset second calibration point on the target path. The first path length between the current position and the second calibration point may be obtained according to the coordinates of the current position, the coordinates of the second calibration point, and a geometrical shape parameter of the subpath between the current position and the second calibration point. The second path length between the first calibration point and the second calibration point on the target path may be obtained by using the foregoing method.

S508: The portable electronic device divides the first path length by the second path length to obtain a proportion value.

S509: The portable electronic device determines whether the obtained proportion value is less than a third threshold.

The third threshold is less than 1. A smaller proportion value indicates that the portable mobile terminal is closer to the second calibration point.

S510: The portable electronic device determines that the obtained proportion value is less than the third threshold, and obtains a track parameter value at the second calibration point.

The track parameter value includes any one of a curvature change rate, a curvature radius change rate, a curvature, or a curvature radius. For obtainment of the track parameter at the second calibration point, reference may be made to that of the track parameter at the first calibration point. Details are not further described herein.

Specifically, each point on the target path is corresponding to a track parameter value. The portable electronic device obtains the track parameter value at the current position and the track parameter value at the second calibration point.

S511: The portable electronic device calculates a difference that is obtained by subtracting the track parameter value at the second calibration point from the track parameter value at the current position.

S512: The portable electronic device determines whether the difference obtained by calculation is less than a fourth threshold.

The fourth threshold is less than 1. A smaller difference obtained by calculation indicates that the portable mobile terminal is closer to the second calibration point. The third threshold and the fourth threshold may be equal or not equal.

S513: The portable electronic device determines that the difference is less than the fourth threshold, and corrects the coordinates of the current position to the coordinates of the second calibration point.

S514: The portable electronic device obtains coordinates of a turning position.

Specifically, the portable electronic device moves on the subpath between the first calibration point and the second calibration point. The portable electronic device moves towards the second calibration point from a t1 time point to a t2 time point, and moves towards the first calibration point from the t2 time point to a t3 time point. The portable electronic device obtains, according to the dead reckoning technology, a current position corresponding to the t3 time point and a turning position corresponding to the t2 time point. Based on the current position, the first calibration point is a next calibration point, and the second calibration point is a previous calibration point.

S515: The portable electronic device calculates a third path length between the current position and the turning position, and a fourth path length between the second calibration point and the turning position.

Specifically, the third path length indicates a length of a corresponding path between the current position and the turning position on the target path. The fourth path length indicates a length of a corresponding path between the second calibration point and the turning position on the target path. The path may be a straight line or a curve. A specific shape is determined by the shape of the target path. The portable electronic device may obtain the third path length according to the coordinates of the current position, the coordinates of the turning position, and a geometrical shape parameter of the subpath between the current position and the turning position, where the coordinates are obtained according to the dead reckoning technology. The fourth path length between the second calibration point and the turning position may be obtained by using the foregoing method. Details are not further described herein.

S516: The portable electronic device calculates a proportion value that is obtained by dividing the third path length by the fourth path length.

S517: The portable electronic device determines whether the proportion value obtained by calculation is greater than a fifth threshold.

The fifth threshold is a value less than 1. A greater proportion value obtained by calculation indicates that the portable mobile terminal is closer to the second calibration point.

S518: The portable electronic device determines that the proportion value is greater than the fifth threshold, and obtains a track parameter value at the second calibration point.

S519: The portable electronic device calculates a difference that is obtained by subtracting the second track parameter value from the track parameter value at the current position.

S520: The portable electronic device determines whether the difference obtained by calculation is less than a sixth threshold.

The sixth threshold is less than 1. A smaller difference obtained indicates that the portable electronic device is closer to the second calibration point.

The first threshold and the second threshold may be equal or not equal. The third threshold, the fourth threshold, the fifth threshold, and the sixth threshold may be equal or not equal. A specific value is set as required.

S521: The portable electronic device determines that the difference is less than the sixth threshold, and corrects the coordinates of the current position to the coordinates of the second calibration point.

In some embodiments of the present invention, optionally, when the dead reckoning technology is the pedestrian dead reckoning technology, the current position is determined according to the step length information, and the step length information is updated. This embodiment of the present invention further includes: obtaining a path length of a path corresponding to at least two calibration points; collecting statistics on m motion statuses of the portable electronic device on the path and a step quantity corresponding to each of the m motion statuses; and obtaining new step length information according to the path length, the m motion statuses, and the step quantity corresponding to each motion status.

Specifically, the step length information indicates a corresponding step length in different motion statuses. The motion statuses include a walking state, a jogging state, and a running state. The start position, a calibration point A, a calibration point B, and the destination position are set on the target path. The portable electronic device moves from the start position to the destination position on the target path. A subpath between the start position and the calibration point A is a subpath 1. A subpath between the calibration point A and the calibration point B is a subpath 2. A subpath between the calibration point B and the destination position is a subpath 3. The portable electronic device may obtain coordinates of the start position by using GPS positioning, Wi-Fi positioning, or Bluetooth positioning; calculate a current position of the portable electronic device in real time by using default step length information and the dead reckoning technology; and correct coordinates of the current position to coordinates of the calibration point A when the track parameter value at the current position meets a preset calibration condition. The portable electronic device obtains a length of the subpath 1, that is, L, and counts that there are m motion statuses on the subpath 1. In the m motion statuses, the portable electronic device moves for y1, y2, ..., and yN steps by using step lengths of xl, x2, ..., and xN respectively. Then, an equation x1 ^{∗} y1 + x2 ^{∗} y2 + ... + xN ^{∗} yN = L holds. Solutions are found by using this equation and historical equations as simultaneous equations, to obtain a step length (that is, step length information) in each motion status. When the portable electronic device moves on the subpath 2, the step length information obtained for the subpath 1 is considered as new step length information for calculating a current position of the portable electronic device on the subpath 2.

In some embodiments of the present invention, optionally, the method further includes: obtaining a motion distance that is obtained by calculation according to the dead reckoning technology; and when the motion distance is greater than a preset length and no point meeting the calibration condition is detected in the motion distance, stopping the calibration procedure and starting another positioning manner, such as satellite positioning, Wi-Fi positioning, or Bluetooth positioning.

In some embodiments of the present invention, optionally, the portable electronic device has turned around once between the first calibration point and the second calibration point. After the turning around, the motion direction of the portable electronic device is from the second calibration point to the first calibration point. A processing procedure is: obtaining coordinates of a turning position, and calculating a third path length between the current position and the turning position, and a fourth path length between the first calibration point and the turning position; calculating a proportion value that is obtained by dividing the third path length by the fourth path length; determining whether the proportion value obtained by calculation is greater than a fifth threshold; if the proportion value is greater than the fifth threshold, obtaining a track parameter value at the first calibration point, and calculating a difference that is obtained by subtracting the track parameter value at the first calibration point from the track parameter value at the current position; and determining whether the difference obtained by calculation is less than a sixth threshold, and if the difference is less than the sixth threshold, correcting the coordinates of the current position to the coordinates of the second calibration point.

For a specific principle, reference may be made to descriptions of S514-S521. Details are not further described herein.

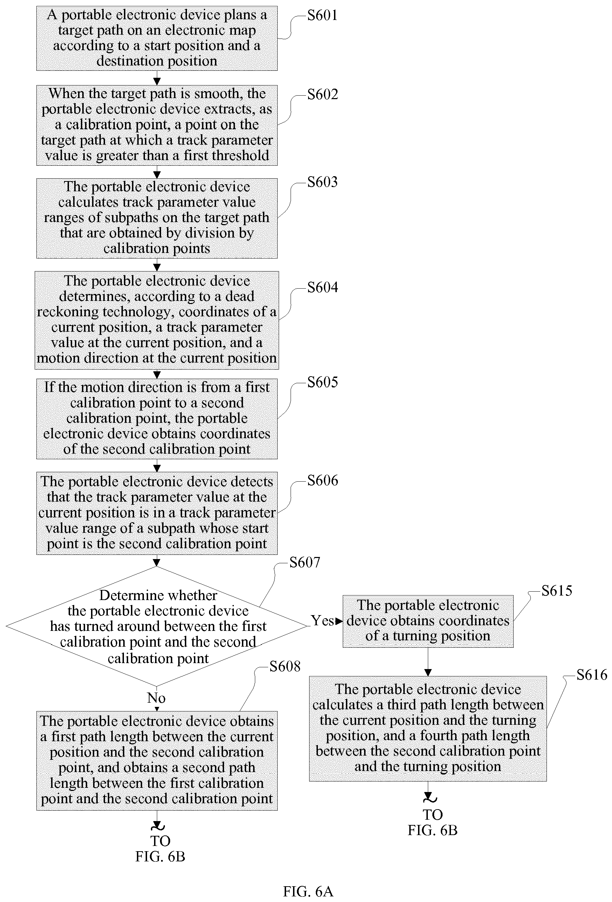

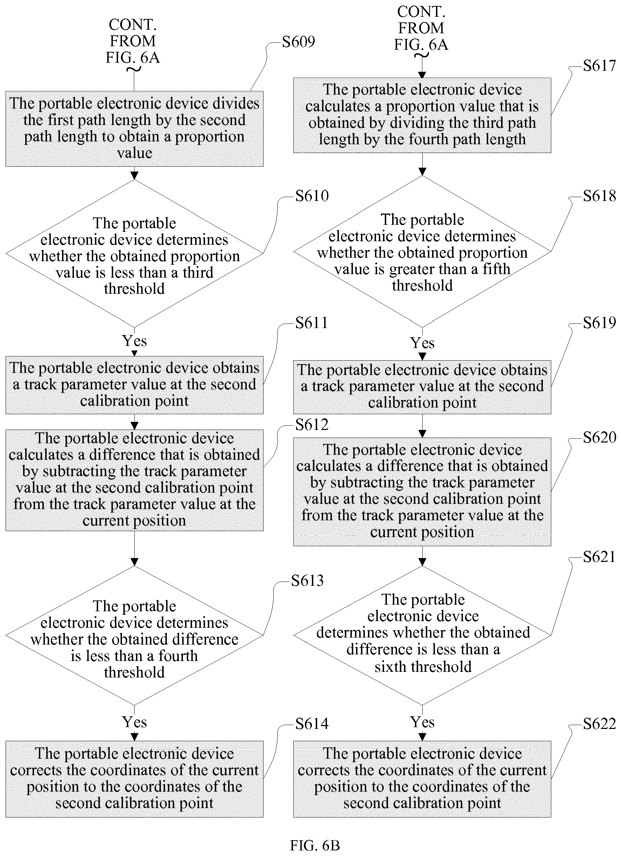

Referring to FIG. 6A and FIG. 6B, FIG. 6A and FIG. 6B is a calibration method based on a dead reckoning technology according to an embodiment of the present invention. In this embodiment of the present invention, the method includes the following steps.

S601: A portable electronic device plans a target path on an electronic map according to a start position and a destination position.

Specifically, the portable electronic device starts a map navigation program, displays the electronic map on a user interface, and obtains the target path according to the start position and the destination position and by using a preset path planning algorithm. The start position may be manually input by a user, or obtained by a user terminal by self-positioning according to a preset positioning algorithm, such as GPS positioning, Wi-Fi positioning, or Bluetooth positioning. The target path may be any path input by the user on the electric map. This is not limited in the present invention.

S602: When the target path is smooth, the portable electronic device extracts as a calibration point a point on the target path at which a track parameter value is greater than a first threshold.

Specifically, that the target path is smooth indicates that the target path has no point at which a sharp turn of the track parameter value occurs. If the target path is considered as a function curve of a two-dimensional plane, points on the function curve are differentiable everywhere. The track parameter value includes any one of a curvature change rate, a curvature radius change rate, a curvature, or a curvature radius. For example, a procedure of extracting, by the portable electronic device, the point on the target path at which a track parameter value is greater than the first threshold may be: performing sampling on the target path according to a preset time interval to obtain multiple points, calculating curvature change rate values at the points, and using a point at which a curvature change rate value is greater than the first threshold as a calibration point. When there are consecutive points meeting a condition that a curvature change rate value is greater than the first threshold, the multiple consecutive calibration points are combined into one calibration point. A method for combination may be: using a point with a largest curvature change rate value in the multiple calibration points as the calibration point obtained after combination, or using a calibration point in a middle position in the multiple calibration points as the calibration point obtained after combination. It should be noted that, for convenience of processing, the start position and the destination position are considered as calibration points in this embodiment.

S603: The portable electronic device calculates track parameter value ranges of subpaths on the target path that are obtained by division by calibration points.

Specifically, multiple calibration points set on the target path divide the target path into multiple subpaths. A minimum track parameter value and a maximum the track parameter value that are corresponding to each subpath are obtained. A track parameter value range of each subpath is determined according to the minimum track parameter value and the maximum track parameter value. For example, the start position, a calibration point A, a calibration point B, and the destination position are sequentially arranged on the target path. The target path is divided into three subpaths, which are, respectively, a subpath 1 between the start position and the calibration point A, a subpath 2 between the calibration point A and the calibration point B, and a subpath 3 from the calibration point B to the destination position. A track parameter value range of each of the foregoing three subpaths is calculated. A track parameter value in the track parameter value range is preferentially a curvature or a curvature radius.

S604: The portable electronic device determines, according to the dead reckoning technology, coordinates of a current position, a track parameter value at the current position, and a motion direction at the current position.

Specifically, the portable electronic device obtains output data of a built-in sensor (such as an accelerometer, a gyroscope, or a geomagnetic sensor) to obtain a motion track. If the dead reckoning technology is a pedestrian dead reckoning technology, the coordinates of the current position of the portable electronic device on the electronic map are determined by using initial step length information and the dead reckoning technology. The coordinates of the current position herein are obtained by the portable electronic device according to the dead reckoning technology. The track parameter value at the current position of the portable electronic device is also obtained according to the dead reckoning technology. The track parameter value includes the curvature change rate or the curvature radius change rate. Each point on the motion track is corresponding to a curvature change rate or a curvature radius change rate.

Coordinate ranges of subpaths on the target path are different. Therefore, the portable electronic device may obtain, by estimation according to the coordinates of the current position, a current residence subpath of the portable electronic device, and obtain, by estimation according to the motion direction, a next subpath. For example, it is determined, according to the coordinates of the current position, that the current subpath is the subpath 1, and the motion direction is from the start position to the destination position. Then the next subpath is the subpath 2.

S605: If the motion direction is from a first calibration point to a second calibration point, the portable electronic device obtains coordinates of the second calibration point.

Specifically, the portable electronic device moves on the target path. The calibration points on the target path divide the target path into multiple subpaths. A motion procedure of the portable electronic device is considered based on each subpath separately. It is assumed that the portable electronic device moves on a subpath between the first calibration point and the second calibration point. If the motion direction at the current position is from the first calibration point to the second calibration point, it is determined that the first calibration point is a previous calibration point, and the second calibration point is a next calibration point; if the motion direction at the current position is from the second calibration point to the first calibration point, the second calibration point is a previous calibration point, and the first calibration point is a next calibration point.

S606: The portable electronic device detects that the track parameter value at the current position is in a track parameter value range of a subpath whose start point is the second calibration point.

Specifically, track parameter value ranges of two adjacent subpaths are different. When it is detected that the track parameter value at the current position is in a track parameter value range of a next subpath, S604 is executed.

For example, the two adjacent subpaths are a subpath A and a subpath B, a track parameter value range of the subpath A is [x1, x2), and a track parameter value range of the subpath B is [x2, x3), where x1 < x2 < x3. When it is detected that a first track parameter value at the current position falls in the track parameter value range of the subpath B from the track parameter value range of the subpath A, S607 is executed; otherwise, S604 continues to be executed.

S607: The portable electronic device determines whether the portable electronic device has turned around between the first calibration point and the second calibration point.

Specifically, the portable electronic device may identify the motion direction by using a built-in sensor (an accelerometer, a gyroscope, or a geomagnetic sensor), and determine, according to the motion direction, whether the portable electronic device has turned around between the first calibration point and the second calibration point. If the portable electronic device has not turned around between the first calibration point and the second calibration point, S607 is executed; otherwise, S615 is executed.

It should be noted that, in this embodiment of the present invention, the turning around means turning around only once on a subpath between two calibration points.

S608: The portable electronic device obtains a first path length between the current position and the second calibration point, and obtains a second path length between the first calibration point and the second calibration point.

Specifically, the first path length is a length of a corresponding path between the current position and the second calibration point on the target path. The second path length is a length of a corresponding path between the first calibration point and the second calibration point on the target path. A shape of the path depends on a length of the target path. The path may be a line segment or a curve. The portable electronic device obtains the coordinates of the current position that are obtained according to the dead reckoning technology, and obtains the coordinates of the preset second calibration point on the target path. The first path length between the current position and the second calibration point may be obtained according to the coordinates of the current position, the coordinates of the second calibration point, and a geometrical shape parameter of a subpath between the current position and the second calibration point. The second path length between the first calibration point and the second calibration point on the target path may be obtained by using the foregoing method.

S609: The portable electronic device divides the first path length by the second path length to obtain a proportion value.

S610: The portable electronic device determines whether the proportion value obtained by calculation is less than a third threshold.

The third threshold is less than 1. A smaller proportion value indicates that the portable electronic device is closer to the second calibration point.

S611: The portable electronic device obtains a track parameter value at the second calibration point, where the track parameter value includes any one of a curvature change rate, a curvature radius change rate, a curvature, or a curvature radius.

S612: The portable electronic device calculates a difference that is obtained by subtracting the track parameter value at the second calibration point from the track parameter value at the current position.

S613: The portable electronic device determines whether the difference obtained by calculation is less than a fourth threshold.

The fourth threshold is less than 1. A smaller difference indicates that the portable electronic device is closer to the second calibration point.

S614: The portable electronic device determines that the difference is less than the fourth threshold, and corrects the coordinates of the current position to the coordinates of the second calibration point.

S615: The portable electronic device obtains coordinates of a turning position.

Specifically, the portable electronic device moves on the subpath between the first calibration point and the second calibration point. The portable electronic device moves towards the second calibration point from a t1 time point to a t2 time point, and moves towards the first calibration point from the t2 time point to a t3 time point. The portable electronic device obtains, according to the dead reckoning technology, coordinates of a current position corresponding to the t3 time point and coordinates of a turning position corresponding to the t2 time point. Based on the current position, the first calibration point is a previous calibration point, and the second calibration point is a next calibration point.

S616: The portable electronic device calculates a third path length between the current position and the turning position, and a fourth path length between the second calibration point and the turning position.

Specifically, the third path length and the fourth path length are lengths of corresponding paths on the target path. The paths may be line segments or curves. A specific shape depends on the length of the target path. The portable electronic device may obtain the third path length according to the coordinates of the current position, the coordinates of the turning position, and a geometrical shape parameter of a subpath between the current position and the turning position, where the coordinates are obtained according to the dead reckoning technology. The fourth path length between the second calibration point and the turning position may be obtained by using the foregoing method. Details are not further described herein.

S617: The portable electronic device calculates a proportion value that is obtained by dividing the third path length by the fourth path length.

S618: The portable electronic device determines whether the proportion value obtained by calculation is greater than a fifth threshold.

The fifth threshold is less than 1. A greater proportion value indicates that the portable electronic device is closer to the second calibration point.

S619: The portable electronic device determines that the proportion value is greater than the fifth threshold, and obtains a track parameter value at the second calibration point.

S620: The portable electronic device calculates a difference that is obtained by subtracting the second track parameter value from the track parameter value at the current position.

S621: The portable electronic device determines whether the difference obtained by calculation is less than a sixth threshold.

S622: The portable electronic device determines that the difference obtained by calculation is less than the sixth threshold, and corrects the coordinates of the current position to the coordinates of the second calibration point.

The first threshold and the second threshold may be equal or not equal. The third threshold, the fourth threshold, the fifth threshold, and the sixth threshold may be equal or not equal. A specific value is set as required.

Optionally, the portable electronic device has turned around once between the first calibration point and the second calibration point. After the turning around, the motion direction of the portable electronic device is from the second calibration point to the first calibration point. A processing procedure is: obtaining coordinates of a turning position, and calculating a third path length between the current position and the turning position, and a fourth path length between the first calibration point and the turning position; calculating a proportion value that is obtained by dividing the third path length by the fourth path length; determining whether the proportion value obtained by calculation is greater than a fifth threshold; if the proportion value is greater than the fifth threshold, obtaining a track parameter value at the first calibration point, and calculating a difference that is obtained by subtracting the track parameter value at the first calibration point from the track parameter value at the current position; and determining whether the difference obtained by calculation is less than a sixth threshold, and if the difference is less than the sixth threshold, correcting the coordinates of the current position to the coordinates of the second calibration point.

For a specific principle, reference may be made to descriptions of S615-S622. Details are not described herein.

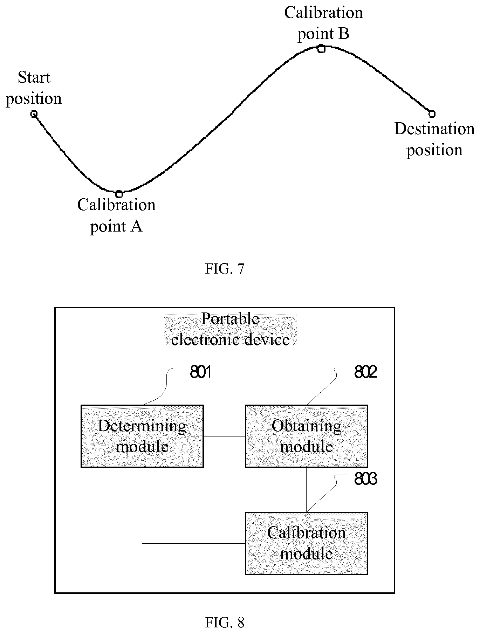

Referring to FIG. 8, FIG. 8 is a schematic structural diagram of a portable electronic device according to an embodiment of the present invention. In this embodiment of the present invention, the portable electronic device is configured to implement the method shown in FIG. 1. The portable electronic device includes: a determining module 801, an obtaining module 802, and a calibration module 803.

The determining module 801 is configured to determine, according to a dead reckoning technology, coordinates of a current position of the portable electronic device, a track parameter value at the current position, and a motion direction at the current position. The track parameter value includes any one of a curvature change rate, a curvature radius change rate, a curvature, or a curvature radius. The portable electronic device moves on a preset target path. At least two calibration points are set on the target path.

The obtaining module 802 is configured to: when the motion direction is from a first calibration point to a second calibration point, obtain coordinates of the second calibration point.

The calibration module 803 is configured to: when it is detected that the track parameter value at the current position meets a preset calibration condition, correct the coordinates of the current position to the coordinates of the second calibration point.

This embodiment of the present invention is based on a same idea and brings a same technical effect, as the first method embodiment. For a specific principle, reference may be made to the description of the first method embodiment. Details are not further described herein.

Optionally, in some embodiments of the present invention,
when the target path is smooth, a calibration point on the target path is a point on the target path at which a track parameter value is greater than a first threshold; or when the target path is non-smooth, a calibration point on the target path is a turning point on the target path.

Optionally, the calibration module is specifically configured to:
when it is detected that the track parameter value at the current position is greater than a second threshold, correct the coordinates of the current position to the coordinates of the second calibration point.

Optionally, the portable electronic device further includes:
a configuration module, configured to: when the target path is smooth, determine track parameter value ranges of subpaths on the target path that are obtained by division by the calibration points, where the calibration point is a point on the target path at which a track parameter value is greater than a first threshold; and
the calibration module is specifically configured to:
   when it is detected that the track parameter value at the current position is in a track parameter value range of a subpath whose start point is the second calibration point, correct the coordinates of the current position to the coordinates of the second calibration point.

Optionally, the when it is detected that the track parameter value at the current position is greater than a second threshold, correcting, by the calibration module, the coordinates of the current position to the coordinates of the second calibration point includes:
when it is detected that the track parameter value at the current position is greater than the second threshold and the portable electronic device has not turned around between the first calibration point and the second calibration point, obtaining a first path length between the current position and the second calibration point, and obtaining a path length between the first calibration point and the second calibration point;
dividing the first path length by the second path length to obtain a proportion value;
if the proportion value obtained by calculation is less than a third threshold, obtaining a track parameter value at the second calibration point;
calculating a difference that is obtained by subtracting the track parameter value at the second calibration point from the track parameter value at the current position; and
if the difference obtained by calculation is less than a fourth threshold, correcting the coordinates of the current position to the coordinates of the second calibration point.

Optionally, the when it is detected that the track parameter value at the current position is greater than a second threshold, correcting, by the calibration module, the coordinates of the current position to the coordinates of the second calibration point includes:
when it is detected that the track parameter value at the current position is greater than the second threshold and the portable electronic device has turned around once between the first calibration point and the second calibration point, obtaining coordinates of a turning position;
calculating a third path length between the current position and the turning position, and a fourth path length between the second calibration point and the turning position;
calculating a proportion value that is obtained by dividing the third path length by the fourth path length;
if the proportion value obtained by calculation is greater than a fifth threshold, obtaining a track parameter value at the second calibration point;
calculating a difference that is obtained by subtracting the track parameter value at the second calibration point from the track parameter value at the current position; and
if the difference obtained by calculation is less than a sixth threshold, correcting the coordinates of the current position to the coordinates of the second calibration point.

Optionally, the when it is detected that the track parameter value at the current position is in a track parameter value range of a subpath whose start point is the second calibration point, correcting, by the calibration module, the coordinates of the current position to the coordinates of the second calibration point includes:
when it is detected that the track parameter value at the current position is in the track parameter value range of the subpath whose start point is the second calibration point and the portable electronic device has not turned around between the first calibration point and the second calibration point, obtaining a first path length between the current position and the second calibration point, and obtaining a second path length between the first calibration point and the second calibration point;
dividing the first path length by the second path length to obtain a proportion value;
if the proportion value obtained by calculation is less than a third threshold, obtaining a track parameter value at the second calibration point;
calculating a difference that is obtained by subtracting the track parameter value at the second calibration point from the track parameter value at the current position; and
if the difference is less than a fourth threshold, correcting the coordinates of the current position to the coordinates of the second calibration point.

Optionally, the when it is detected that the track parameter value at the current position is in a track parameter value range of a subpath whose start point is the second calibration point, correcting, by the calibration module, the coordinates of the current position to the coordinates of the second calibration point includes:
when it is detected that the track parameter value at the current position is in the track parameter value range of the subpath whose start point is the second calibration point and the portable electronic device has turned around once between the first calibration point and the second calibration point, obtaining coordinates of a turning position;
calculating a third path length between the current position and the turning position, and a fourth path length between the second calibration point and the turning position;
calculating a proportion value that is obtained by dividing the third path length by the fourth path length;
if the proportion value obtained by calculation is greater than a fifth threshold, obtaining a track parameter value at the second calibration point;
calculating a difference that is obtained by subtracting the track parameter value at the second calibration point from the track parameter value at the current position; and
if the difference obtained by calculation is less than a sixth threshold, correcting the coordinates of the current position to the coordinates of the second calibration point.

Optionally, the determining module is specifically configured to determine, according to a pedestrian dead reckoning technology and step length information, the coordinates of the current position of the portable electronic device, the track parameter value at the current position, and the motion direction at the current position; and
the portable electronic device further includes:
a length obtaining module, configured to obtain the path length between the first calibration point and the second calibration point;
a statistics module, configured to collect statistics on m motion statuses of the portable electronic device between the first calibration point and the second calibration point, and a step quantity corresponding to each of the m motion statuses; and
a step length calculation module, configured to obtain new step length information according to the m motion statuses, the step quantity corresponding to each of the m motion statuses, and the path length between the first calibration point and the second calibration point.

This embodiment of the present invention is based on a same idea and brings a same technical effect, as the second and third method embodiments. For a specific principle, reference may be made to the descriptions of the second and third method embodiments. Details are not further described herein.

In addition, a computer readable storage medium that stores one or more programs is further provided. The one or more programs include an instruction. When executed by a portable electronic device, the instruction instructs the portable electronic device to execute the method according to any one of the foregoing embodiments.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), a random access memory (Random Access Memory, RAM), or the like.

## Claims

1. A calibration method based on a dead reckoning technology performed by a portable electronic device, the method comprising:
• determining, according to the dead reckoning technology, coordinates of a current position of the portable electronic device, a track parameter value at the current position, and a motion direction at the current position, wherein the track parameter value comprises any one of a curvature change rate, a curvature radius change rate, a curvature, or a curvature radius, wherein the portable electronic device moves on a preset target path, and at least two calibration points are set on the preset target path, wherein when the preset target path is smooth, each calibration point of the at least two calibration points on the preset target path is a point on the preset target path at which the track parameter value is greater than a first threshold; or when the preset target path is non-smooth, each calibration point of the at least two calibration points on the preset target path is a turning point on the preset target path (S401, S402);
• if the motion direction is from a first calibration point to a second calibration point, obtaining coordinates of the second calibration point; and
when it is detected that the track parameter value at the current position is greater than a second threshold, correcting the coordinates of the current position to the coordinates of the second calibration point (S 403).

2. The method according to claim 1, wherein the when it is detected that the track parameter value at the current position is greater than the second threshold, correcting the coordinates of the current position to the coordinates of the second calibration point comprises:
when it is detected that the track parameter value at the current position is greater than the second threshold and the portable electronic device has not turned around between the first calibration point and the second calibration point, obtaining a first path length between the current position and the second calibration point, and obtaining a path length between the first calibration point and the second calibration point;
dividing the first path length by the second path length to obtain a proportion value;
if the proportion value obtained by calculation is less than a third threshold, obtaining a track parameter value at the second calibration point;
calculating a difference that is obtained by subtracting the track parameter value at the second calibration point from the track parameter value at the current position; and
if the difference obtained by calculation is less than a fourth threshold, correcting the coordinates of the current position to the coordinates of the second calibration point.

3. The method according to claim 1, wherein the when it is detected that the track parameter value at the current position is greater than the second threshold, correcting the coordinates of the current position to the coordinates of the second calibration point comprises:
when it is detected that the track parameter value at the current position is greater than the second threshold and the portable electronic device has turned around once between the first calibration point and the second calibration point, obtaining coordinates of a turning position;
calculating a third path length between the current position and the turning position, and a fourth path length between the second calibration point and the turning position;
calculating a proportion value that is obtained by dividing the third path length by the fourth path length;
if the proportion value obtained by calculation is greater than a fifth threshold, obtaining a track parameter value at the second calibration point;
calculating a difference that is obtained by subtracting the track parameter value at the second calibration point from the track parameter value at the current position; and
if the difference obtained by calculation is less than a sixth threshold, correcting the coordinates of the current position to the coordinates of the second calibration point.

4. A portable electronic device (100, 300) configured to perform any of the methods according to claims 1 to 3.

5. A computer readable storage medium that stores one or more programs, wherein the one or more programs comprise instructions, and when executed by a portable electronic device, the instructions cause the portable electronic device to execute the method according to any one of claims 1 to 3.

## Patentansprüche

1. Kalibrierungsverfahren basierend auf einer Koppelnavigationstechnik, das von einem tragbaren elektronischen Gerät durchgeführt wird, wobei das Verfahren Folgendes aufweist:
• Bestimmen von Koordinaten einer aktuellen Position des tragbaren elektronischen Geräts, eines Wegparameterwerts an der aktuellen Position und einer Bewegungsrichtung an der aktuellen Position gemäß der Koppelnavigationstechnik, wobei der Wegparameterwert eine Krümmungsänderungsrate und/oder eine Krümmungsradiusänderungsrate und/oder eine Krümmung und/oder einen Krümmungsradius aufweist, wobei sich das tragbare elektronische Gerät auf einem voreingestellten Zielpfad bewegt, und mindestens zwei Kalibrierungspunkte auf dem Zielpfad eingestellt werden, wobei wenn der voreingestellten Zielpfad glatt ist, jeder Kalibrierungspunkt der mindestens zwei Kalibrierungspunkte auf dem voreingestellten Zielpfad ein Punkt auf dem voreingestellten Zielpfad ist, an dem der Wegparameterwert größer als ein erster Schwellenwert ist; oder wenn der voreingestellte Zielpfad nicht glatt ist, jeder Kalibrierungspunkt der mindestens zwei Kalibrierungspunkte auf dem voreingestellten Zielpfad ein Wendepunkt auf dem voreingestellten Zielpfad ist (S401, S402);
• wenn die Bewegungsrichtung von einem ersten Kalibrierungspunkt zu einem zweiten Kalibrierungspunkt ist, Erhalten von Koordinaten des zweiten Kalibrierungspunkts; und
wenn erkannt wird, dass der Wegparameterwert an der aktuellen Position größer als ein zweiter Schwellenwert ist, Korrigieren der Koordinaten der aktuellen Position auf die Koordinaten des zweiten Kalibrierungspunkts (S 403).

2. Verfahren nach Anspruch 1, wobei wenn erkannt wird, dass der Wegparameterwert an der aktuellen Position größer als der zweite Schwellenwert ist, das Korrigieren der Koordinaten der aktuellen Position auf die Koordinaten des zweiten Kalibrierungspunkts Folgendes aufweist:
wenn erkannt wird, dass der Wegparameterwert an der aktuellen Position größer als der zweite Schwellenwert ist und das tragbare elektronische Gerät zwischen dem ersten Kalibrierungspunkt und dem zweiten Kalibrierungspunkt nicht gewendet hat,
Erhalten einer ersten Pfadlänge zwischen der aktuellen Position und dem zweiten Kalibrierungspunkt und Erhalten einer Pfadlänge zwischen dem ersten Kalibrierungspunkt und dem zweiten Kalibrierungspunkt;
Teilen der ersten Pfadlänge durch die zweite Pfadlänge, um einen Anteilswert zu erhalten;
wenn der durch Berechnung erhaltene Anteilswert kleiner als ein dritter Schwellenwert ist, Erhalten eines Wegparameterwerts am zweiten Kalibrierungspunkt; Berechnen einer Differenz, die durch Subtrahieren des Wegparameterwerts am zweiten Kalibrierungspunkt vom Wegparameterwert an der aktuellen Position erhalten wird; und
wenn die durch Berechnung erhaltene Differenz kleiner als ein vierter Schwellenwert ist, Korrigieren der Koordinaten der aktuellen Position auf die Koordinaten des zweiten Kalibrierungspunkts.

3. Verfahren nach Anspruch 1, wobei wenn erkannt wird, dass der Wegparameterwert an der aktuellen Position größer als der zweite Schwellenwert ist, das Korrigieren der Koordinaten der aktuellen Position auf die Koordinaten des zweiten Kalibrierungspunkts Folgendes aufweist:
wenn erkannt wird, dass der Wegparameterwert an der aktuellen Position größer als der zweite Schwellenwert ist und das tragbare elektronische Gerät zwischen dem ersten Kalibrierungspunkt und dem zweiten Kalibrierungspunkt einmal gewendet hat, Erhalten von Koordinaten einer Wendeposition; Berechnen einer dritten Pfadlänge zwischen der aktuellen Position und der Wendeposition und einer vierten Pfadlänge zwischen dem zweiten Kalibrierungspunkt und der Wendeposition;
Berechnen eines Anteilswerts, der durch Teilen der dritten Pfadlänge durch die vierte Pfadlänge erhalten wird;
wenn der durch Berechnung erhaltene Anteilswert größer als ein fünfter Schwellenwert ist, Erhalten eines Wegparameterwerts am zweiten Kalibrierungspunkt;
Berechnen einer Differenz, die durch Subtrahieren des Wegparameterwerts am zweiten Kalibrierungspunkt vom Wegparameterwert an der aktuellen Position erhalten wird; und
wenn die durch Berechnung erhaltene Differenz kleiner als ein sechster Schwellenwert ist, Korrigieren der Koordinaten der aktuellen Position auf die Koordinaten des zweiten Kalibrierungspunkts.

4. Tragbare elektronische Vorrichtung (100-300), die zum Durchführen eines der Verfahren nach den Ansprüchen 1 bis 3 ausgebildet ist.

5. Computerlesbares Speichermedium, das ein oder mehrere Programme speichert, wobei das eine oder die mehreren Programme Anweisungen aufweisen und bei Ausführung durch eine tragbare elektronische Vorrichtung die Anweisungen die tragbare elektronische Vorrichtung dazu veranlassen, das Verfahren nach einem der Ansprüche 1 bis 3 durchzuführen.

## Revendications

1. Procédé d'étalonnage basé sur une technique de navigation à l'estime réalisée par un dispositif électronique portable, le procédé comprenant :
la détermination, selon la technique de navigation à l'estime, des coordonnées d'une position actuelle du dispositif électronique portable, d'une valeur de paramètre de trajectoire au niveau de la position actuelle et d'une direction de déplacement au niveau de la position actuelle, la valeur de paramètre de trajectoire comprenant l'un quelconque d'un taux de changement de courbure, d'un taux de changement de rayon de courbure, d'une courbure, ou d'un rayon de courbure, le dispositif électronique portable se déplaçant sur un chemin cible prédéfini, et au moins deux points d'étalonnage étant définis sur le chemin cible prédéfini, lorsque le chemin cible prédéfini est lisse, chaque point d'étalonnage des au moins deux points d'étalonnage sur le chemin cible prédéfini étant un point sur le chemin cible prédéfini au niveau duquel la valeur de paramètre de trajectoire est supérieure à un premier seuil ; ou lorsque le chemin cible prédéfini est non lisse, chaque point d'étalonnage des au moins deux points d'étalonnage sur le chemin cible prédéfini étant un point de virage sur le chemin cible prédéfini (S401, S402) ;
si la direction de déplacement part d'un premier point d'étalonnage vers un second point d'étalonnage, l'obtention des coordonnées du second point d'étalonnage ; et
lorsqu'il est détecté que la valeur de paramètre de trajectoire au niveau de la position actuelle est supérieure à un deuxième seuil, la correction des coordonnées de la position actuelle en las coordonnées du second point d'étalonnage (S403).

2. Procédé selon la revendication 1, lorsqu'il est détecté que la valeur de paramètre de trajectoire au niveau de la position actuelle est supérieure au deuxième seuil, la correction des coordonnées de la position actuelle en las coordonnées du second point d'étalonnage comprenant :
lorsqu'il est détecté que la valeur de paramètre de trajectoire au niveau de la position actuelle est supérieure au deuxième seuil et que le dispositif électronique portable n'a pas tourné entre le premier point d'étalonnage et le second point d'étalonnage, l'obtention d'une première longueur de chemin entre la position actuelle et le second point d'étalonnage, et l'obtention d'une longueur de chemin entre le premier point d'étalonnage et le second point d'étalonnage ;
la division de la première longueur de chemin par la deuxième longueur de chemin pour obtenir une valeur de proportion ;
si la valeur de proportion obtenue par calcul est inférieure à un troisième seuil, l'obtention d'une valeur de paramètre de trajectoire au niveau d'un second point d'étalonnage ;
le calcul d'une différence qui est obtenue par soustraction de la valeur de paramètre de trajectoire au niveau du second point d'étalonnage à partir de la valeur de paramètre de trajectoire au niveau de la position actuelle ; et
si la différence obtenue par calcul est inférieure à un quatrième seuil, la correction des coordonnées de la position actuelle en las coordonnées du second point d'étalonnage.

3. Procédé selon la revendication 1, lorsqu'il est détecté que la valeur de paramètre de trajectoire au niveau de la position actuelle est supérieure au deuxième seuil, la correction des coordonnées de la position actuelle en las coordonnées du second point d'étalonnage comprenant :
lorsqu'il est détecté que la valeur de paramètre de trajectoire au niveau de la position actuelle est supérieure au deuxième seuil et que le dispositif électronique portable a tourné une fois entre le premier point d'étalonnage et le second point d'étalonnage, l'obtention des coordonnées d'une position de virage ;
le calcul d'une troisième longueur de chemin entre la position actuelle et la position de virage, et d'une quatrième longueur de chemin entre le second point d'étalonnage et la position de virage ;
le calcul d'une valeur de proportion qui est obtenue par division de la troisième longueur de chemin par la quatrième longueur de chemin ;
si la valeur de proportion obtenue par calcul est supérieure à un cinquième seuil, l'obtention d'une valeur de paramètre de trajectoire au niveau du second point d'étalonnage ;
le calcul d'une différence qui est obtenue par soustraction de la valeur de paramètre de trajectoire au niveau du second point d'étalonnage à partir de la valeur de paramètre de trajectoire au niveau de la position actuelle ; et
si la différence obtenue par calcul est inférieure à un sixième seuil, la correction des coordonnées de la position actuelle en las coordonnées du second point d'étalonnage.

4. Dispositif électronique portable (100, 300) configuré pour réaliser l'un quelconque des procédés selon les revendications 1 à 3.

5. Support de stockage lisible par ordinateur qui stocke un ou plusieurs programmes, le ou les programmes comprenant des instructions, et
lorsqu'elles sont exécutées par un dispositif électronique portable, les instructions amenant le dispositif électronique portable à exécuter le procédé selon l'une quelconque des revendications 1 à 3.
